# EUROPÄISCHE PATENTSCHRIFT

(11) **EP 3 473 395 B1**
(45) Veröffentlichungstag und Bekanntmachung des Hinweises auf die Patenterteilung: **10.03.2021**
(21) Anmeldenummer: 18170198.8
(22) Anmeldetag: 30.04.2018
(51) Int. Cl.: B29B 7/42, B29C 48/45, B29C 48/565, B29C 48/685

(54) **ASYMMETRISCHE DREIFLÜGLIGE SCHNECKENWELLE FÜR EINE MISCH- UND KNETMASCHINE**
ASYMMETRICAL THREE-BLADE SCREW-TYPE SHAFT FOR A MIXING AND KNEADING MACHINE
ARBRE DE VIS SANS FIN ASYMÉTRIQUE, À TROIS AILETTES, POUR UNE MACHINE DE MÉLANGE ET DE MALAXAGE

(30) Priorität: 17.10.2017 EP 17196908; 19.01.2018 EP 18152448
(43) Veröffentlichungstag der Anmeldung: 24.04.2019
(73) Patentinhaber: Buss AG, 4133 Pratteln (CH)
(72) Erfinder: SCHÖTZAU, Martin, 4302 Augst (CH); WALTER, Wolfgang, 73434 Aalen (DE)
(74) Vertreter: Henkel & Partner mbB

(56) Entgegenhaltungen:
- EP-A1- 1 247 454
- EP-A2- 0 140 846
- DE-A1- 2 307 616
- DE-A1- 3 132 429
- DE-T2- 60 100 970
- DE-T2- 69 212 748
- US-A- 3 938 783

## Beschreibung

Die vorliegende Erfindung betrifft eine Schneckenwelle für eine Misch- und Knetmaschine insbesondere für kontinuierliche Aufbereitungsprozesse, einen entsprechenden Schneckenwellenabschnitt, ein eine solche Schneckenwelle bzw. einen solchen Schneckenwellenabschnitt umfassendes Gehäuse sowie eine ein solches Gehäuse umfassende Misch- und Knetmaschine für kontinuierliche Aufbereitungsprozesse.

Derartige Misch- und Knetmaschinen mit derartigen Schneckenwellen werden insbesondere zum Aufbereiten von plastischen und/oder pastösen Massen eingesetzt. Beispielsweise dienen sie dem Verarbeiten von zähplastischen Massen, dem Homogenisieren und Plastifizieren von Kunststoffen, Gummi und dergleichen, dem Einarbeiten von Füll- und Verstärkungsstoffen sowie dem Herstellen von Ausgangsmaterialien für die Lebensmittelindustrie. Die Schneckenwelle bildet hierbei das Arbeitsorgan, welches das zu verarbeitende Material in axialer Richtung vorwärts transportiert bzw. fördert und dabei die Komponenten des Materials miteinander vermischt.

Derartige Misch- und Knetmaschinen eignen sich insbesondere auch zum Herstellen von Polymergranulat, Polymerstrangpressprofilen, Polymerformteilen und dergleichen. Dabei wird in der Misch- und Knetmaschine eine homogene Polymerschmelze erzeugt, welche dann beispielsweise in eine Austragsvorrichtung und von dieser zu beispielsweise einer Granulationsvorrichtung, einem Schacht, einem Förderband oder dergleichen gefördert wird.

Solche Misch- und Knetmaschinen sind beispielsweise aus der CH 278 575 A sowie aus der CH 464 656 bekannt.

Bei diesen Misch- und Knetmaschinen führt die Schneckenwelle vorzugsweise nicht nur eine rotative Bewegung aus, sondern bewegt sich gleichzeitig auch in der axialen Richtung, d.h. in der Längsrichtung der Schneckenwelle, translatorisch vor und zurück. Der Bewegungsablauf zeichnet sich daher vorzugsweise dadurch aus, dass die Schneckenwelle - in der axialen Richtung gesehen - eine der Rotation überlagerte oszillatorische Bewegung ausführt. Dieser Bewegungsablauf ermöglicht das Einbringen von Einbauten, nämlich von Knetelementen, wie von Knetbolzen oder von Knetzähnen, in das Gehäuse der Misch- und Knetmaschine. Wegen des Vorhandenseins der Knetelemente verläuft die auf der Hauptwelle, dem sogenannten Wellenstab, angeordnete Schnecke nicht - im Querschnitt des Wellenstabs gesehen - durchgehend, sondern ist in eine Mehrzahl von einzelnen Flügelelementen unterteilt, die sich jeweils über einen bestimmten Winkelabschnitt des Querschnittsumfangs des Wellenstabes erstrecken. Benachbarte Flügelelemente sind voneinander sowohl in axialer Richtung als auch in der Außenumfangsrichtung des Wellenstabes beabstandet, d.h. zwischen benachbarten Flügelelementen ist sowohl in axialer Richtung als auch in der Außenumfangsrichtung des Wellenstabes jeweils ein Spalt vorgesehen. Wenn beispielsweise der gesamte Wellenstab der Schneckenwelle oder ein axialer Abschnitt des Wellenstabs der Schneckenwelle, im Querschnitt des Wellenstabs gesehen, drei Flügelelemente umfasst, welche sich jeweils über einen Winkelabschnitt von zum Beispiel 100° des Querschnittsumfangs des Wellenstabs erstrecken, spricht man von einer dreiflügligen Schneckenwelle bzw. von einem dreiflügligen Schneckenwellenabschnitt, wenn sich diese Flügelelementanordnung nicht über die gesamte axiale Länge des Wellenstabes, sondern nur über einen Abschnitt hiervon erstreckt. Die Rotation und die translatorische Bewegung der Schneckenwelle in axialer Richtung werden so gesteuert, dass die einzelnen Flügelelemente bei der Rotation und der translatorischen Bewegung mit ihren Flanken in die Nähe der entsprechenden Knetelemente gelangen, um das zu mischende und knetende Material zu verdichten und eine Scherwirkung auf dieses auszuüben, um so den Mischungs- und/oder Knetvorgang zu befördern, ohne dass die Knetelemente mit den Flügelelementen kollidieren. Ferner verhindern die Knetelemente, weil sie den Flanken der Flügelelemente bei der Rotation und der translatorischen Bewegung der Schneckenwelle nahekommen, dass sich auf den Flanken der Flügelelemente Ablagerungen von Komponenten der Mischung ausbilden, so dass die Knetelemente im Ergebnis auch eine Reinigung der Flügelelemente bewirken. Natürlich müssen die Anzahl und die Geometrie der Flügelelemente an die Anzahl der Knetelemente angepasst werden. Üblicherweise sind die einzelnen Knetelemente an der Innenumfangsfläche des Gehäuses der Misch- und Knetmaschine - in der axialen Richtung - in mehreren, auf die Geometrie und Anzahl der Flügelelemente abgestimmten und sich über zumindest einen axialen Abschnitt der Innenumfangsfläche des Gehäuses erstreckenden Reihen von axial beabstandeten Knetelementen angeordnet. Dabei sind die einzelnen Knetelemente in - in der Gehäuseinnenwand vorgesehene - Bohrungen bzw. Aufnahmen eingeschraubt. Zudem sind die Flügelelemente bekannter Schneckenwellen symmetrisch ausgestaltet, d. h. die drei Flügelelemente einer dreiflügligen Schneckenwelle weisen jeweils die gleiche Form sowie die gleichen Dimensionen auf und sind auf der Umfangsfläche des Wellenstabes gleich verteilt, so dass die Mittelpunkte der drei Flügelelemente jeweils um 120° versetzt auf der Umfangsfläche des Wellenstabes angeordnet sind. In Anpassung daran sind an der Innenumfangsfläche des Gehäuses der Misch- und Knetmaschine drei um 120° versetzte Reihen von Aufnahmen für Knetelemente angeordnet. Im Falle einer vierflügligen Schneckenwelle sind die Mittelpunkte der vier Flügelelemente jeweils um 90° versetzt auf der Umfangsfläche des Wellenstabes angeordnet und sind entsprechend an der Innenumfangsfläche des Gehäuses der Misch- und Knetmaschine vier um 90° versetzte Reihen von Aufnahmen für Knetelemente angeordnet.

Häufig sind die beschriebenen Misch- und Knetmaschinen in axialer Richtung in verschiedene Verfahrensabschnitte unterteilt, wobei jeder Verfahrensabschnitt gemäß seiner während des Betriebs zugeordneten Aufgabe mit einer entsprechenden Anzahl bzw. Geometrie an Flügelelementen und Knetelementen besetzt ist. Beispielsweise umfasst eine Misch- und Knetmaschinen in axialer Richtung, je nach zu mischendem Material, einen am stromaufwärtigen Ende liegenden Einzugsabschnitt, in dem die zu mischenden bzw. zu knetenden Bestandteile in die Maschine eingebracht werden, einen sich daran stromabwärts anschließenden Schmelzabschnitt, in dem die Bestandteile geschmolzen werden, einen Misch- und Dispergierabschnitt, in dem etwaige Aggregate der Bestandteile des Materials zerkleinert sowie möglichst homogen miteinander vermischt werden, und einen Entgasungsabschnitt, in dem die Mischung entgast wird. Es ist bereits vorgeschlagen worden, in einzelnen Abschnitten der Misch- und Knetmaschine eine andere Anzahl von Knetelementen vorzusehen als in anderen Abschnitten, um so die Verhältnisse in den einzelnen Abschnitten an die Erfordernisse der verschiedenen Verfahrensabschnitte anzupassen. Hierzu ist es möglich, die Gehäuseschale aus - in axialer Richtung gesehen - mehreren voneinander getrennten Gehäuseschalenabschnitten vorzusehen, was es erlaubt, einzelne axiale Abschnitte des Gehäuses mit einer unterschiedlichen Anzahl von Knetelementen auszustatten. Beispielsweise ist es bekannt, die Schneckenwelle einer Misch- und Knetmaschine abschnittsweise dreiflüglig und abschnittsweise vierflüglig auszugestalten und die Gehäuseschalen der dazu korrespondierenden Abschnitte der Gehäuseinnenwand der Misch- und Knetmaschine mit drei bzw. vier Reihen von Aufnahmen für Knetelemente auszustatten. Wenn die so an die zu mischenden Ausgangsstoffe optimierte Misch- und Knetmaschine für eine andere Anwendung mit anderen Ausgangsstoffen eingesetzt werden soll, muss die Misch- und Knetmaschine bezüglich der Verfahrenszonen neu optimiert und entsprechend umgerüstet werden. Soll in einem Verfahrensabschnitt, in dem zuvor ein vierflügliger Schneckenwellenabschnitt sowie eine mit vier Knetbolzen bestückte Gehäuseschale eingesetzt war, ein dreiflügliger Schneckenwellenabschnitt eingesetzt werden, muss in diesem Abschnitt die mit vier um 90° versetzten Reihen von Aufnahmen für Knetbolzen ausgestattete Gehäuseschale gegen eine mit drei um 120° versetzte Reihen von Aufnahmen für Knetbolzen ausgestattete Gehäuseschale ausgetauscht werden. Insgesamt ist es im Stand der Technik aufwendig, eine Misch- und Knetmaschine in Anpassung an ein anderes zu mischendes Ausgangsmaterial umzurüsten, insbesondere was die Anzahl der Reihen von Knetelementen und die entsprechende Flügelelementanzahl an der Schneckenwelle angeht. Insbesondere erfordern bekannte drei- und vierflüglige Schneckenwellen bzw. Schneckenwellenabschnitte eine spezielle Ausstattung der korrespondierenden Gehäuseabschnitte mit Aufnahmen für Knetelemente.

In der US 3,938,783 wird eine Vorrichtung zum Vermischen flüssiger Reaktanden insbesondere zur Herstellung von Urethanschaum beschrieben, welche eine Schneckenwelle umfasst, welche abschnittsweise vierflüglig und abschnittsweise achtflüglig ausgestaltet ist.

Aus der EP 0 140 846 A2 ist eine Vorrichtung zur Vermischung von Kunststoffmaterialien bekannt, welche eine Schneckenwelle umfasst, welche abschnittsweise dreiflüglig ausgestaltet ist.

Aufgabe der vorliegenden Erfindung ist es daher, die vorgenannten Nachteile zu überwinden und eine dreiflüglige Schneckenwelle bzw. einen dreiflügligen Schneckenwelleabschnitt bereitzustellen, die bzw. der insbesondere auch in Gehäusen bzw. Gehäuseabschnitten eingesetzt werden kann, welche - zumindest auch - mit anderen Schneckenwellenabschnitten, wie insbesondere vierflügligen Schneckenwellenabschnitten, kompatibel ist, so dass in einer Misch- und Knetmaschine eine vierflüglige Schneckenwelle oder ein vierflügliger Schneckenwellenabschnitt gegen die dreiflüglige Schneckenwelle bzw. den dreiflügligen Schneckenwelleabschnitt ausgetauscht werden kann, ohne dass ein Austausch des Gehäuses oder von Gehäuseschalen notwendig ist, sondern allenfalls ein Teil der Knetbolzen von einer Reihe von Aufnahmen in eine andere Reihe umgesteckt werden müssen.

Erfindungsgemäß wird diese Aufgabe durch eine Schneckenwelle nach Anspruch 1 für eine Misch- und Knetmaschine, insbesondere für kontinuierliche Aufbereitungsprozesse gelöst, welche einen Wellenstab mit einem kreisförmigen Querschnitt umfasst, auf dessen Umfangsfläche voneinander beabstandete, sich von der Umfangsfläche des Wellenstabes nach außen erstreckende Flügelelemente angeordnet sind, wobei die Flügelelemente auf der Umfangsfläche des Wellenstabes, zumindest in einem sich in der axialen Richtung der Schneckenwelle erstreckenden Abschnitt, in drei sich in der axialen Richtung der Schneckenwelle erstreckenden Reihen angeordnet sind, wobei dieser sich in der axialen Richtung der Schneckenwelle erstreckende Abschnitt, außer den in den drei Reihen angeordneten Flügelelementen, keine weiteren Flügelelemente umfasst, dadurch gekennzeichnet, dass i) mindestens eines der Flügelelemente einer der Reihen von wenigstens einem anderen der Flügelelemente einer der anderen beiden Reihen verschieden ist, indem es kürzer und/oder schmaler ist, und/oder ii) sich die Reihen der Flügelelemente, im Querschnitt des Wellenstabes gesehen, über den durch die Außenumfangsfläche des Wellenstabes definierten Umfang hinweg ungleichmäßig verteilen. Mithin betrifft die vorliegende Erfindung eine zumindest abschnittsweise asymmetrische dreiflüglig ausgestaltete Schneckenwelle.

Indem die erfindungsgemäße Schneckenwelle zumindest abschnittsweise asymmetrisch dreiflüglig ausgestaltet ist, kann diese auch in einem mit anderen Schneckenwellenabschnitten, wie insbesondere mit vierflügligen Schneckenwellenabschnitten, kompatiblen Gehäuse einer Misch- und Knetmaschine eingesetzt werden. Daher kann der erfindungsgemäß asymmetrisch dreiflüglig ausgestaltete Abschnitt der Schneckenwelle einen vierflüglig ausgestalteten Schneckenwellenabschnitt ersetzen, ohne dass ein Austausch des Gehäuses oder von Gehäuseschalen notwendig ist. Dies liegt daran, dass es die erfindungsgemäß zumindest abschnittsweise asymmetrisch dreiflüglig ausgestaltete Schneckenwelle erlaubt, in Gehäusen eingesetzt zu werden, deren Aufnahmen für Knetelemente, zumindest in einem in axialer Richtung des Gehäuses erstreckendem Abschnitt, im Querschnitt des Gehäuses gesehen, über den durch die Innenumfangsfläche des Gehäuses bzw. der Gehäuseschale definierten Umfang hinweg ungleichmäßig verteilt sind. Unter einer ungleichmäßigen Verteilung der Aufnahmen für Knetelemente über den durch die Innenumfangsfläche des Gehäuses definierten Umfang wird dabei verstanden, dass - im Querschnitt des Gehäuses betrachtet - von allen Abständen zwischen jeweils zwei Aufnahmen für Knetelemente benachbarter Reihen auf der Innenumfangsfläche des Gehäuses mindestens zwei Abstände voneinander verschieden sind. Durch diese ungleichmäßige Anordnung der Aufnahmen für Knetelemente wird erreicht, dass einfach mehrere Varianten von Besetzungen der Aufnahmen im Hinblick auf die Anzahl und Anordnung der Knetelemente verwirklicht werden können, und zwar unter Beibehaltung eines optimalen Wirkungsgrades der Misch- und Knetmaschine in Bezug auf den Materialdurchsatz pro Zeiteinheit. Sind beispielsweise an der Gehäuseinnenumfangsfläche sechs sich in axialer Richtung der Misch- und Knetmaschine erstreckende Reihen von Aufnahmen für Knetelemente vorgesehen, dann wird durch die im Querschnitt gesehene Ungleichverteilung der Reihen von Aufnahmen für Knetelemente auf der Innenumfangsfläche des Gehäuses bewirkt, dass man alternativ zu einer Besetzung aller Reihen oder von vier Reihen mit Knetelementen auch eine Besetzung von nur drei Reihen mit Knetelementen vorsehen kann und drei der Aufnahmereihen unbesetzt lassen kann, wobei dennoch die besetzten Reihen so zueinander beabstandet sind, dass ein optimaler Wirkungsgrad der Misch- und Knetmaschine in Bezug auf den Materialdurchsatz pro Zeiteinheit erreicht wird. Unter einer Aufnahme für Knetelemente wird im Sinne der vorliegenden Erfindung ein Hohlraum an der Innenumfangsfläche des Gehäuses angesehen, der so ausgestaltet ist, dass ein Knetelement, also ein Knetbolzen, ein Knetzahn oder dergleichen, in diesem angeordnet und durch diesen befestigt werden kann, so dass sich das Knetelement von der Innenumfangsfläche des Gehäuses radial nach innen in den hohlen Innenraum hinein erstreckt. Bei der Aufnahme kann es sich um eine Vertiefung, Aussparung, Bohrung oder dergleichen handeln, welche sich mehr oder weniger tief von der Innenumfangsfläche des Gehäuses in das Gehäuse hinein erstreckt. Vorzugsweise ist wenigstens eine der Aufnahmen eine Aussparung, Vertiefung oder Bohrung und sind bevorzugt jede der Aufnahmen eine Aussparung, Vertiefung oder Bohrung. Im Fall eines typischen zweikomponentigen Aufbaus des Gehäuses aus einem Außengehäuse und radial innen daran angeordneter Gehäuseschale erstreckt sich die Aufnahme von der Innenumfangsfläche der Gehäuseschale in diese und ggf. auch in das Außengehäuse hinein und ggf. durch das Außengehäuse hindurch. Im Fall eines einkomponentigen Aufbaus des Gehäuses erstreckt sich somit die Aufnahme von der Innenumfangsfläche des Gehäuses in dieses hinein und ggf. durch dieses hindurch.

Erfindungsgemäß weist die Schneckenwelle auf der Umfangsfläche des Wellenstabes sich nach außen erstreckende Flügelelemente auf, welche auf der Umfangsfläche des Wellenstabes, zumindest in einem sich in der axialen Richtung der Schneckenwelle erstreckenden Abschnitt, in drei sich in der axialen Richtung der Schneckenwelle erstreckenden Reihen angeordnet sind. Dieser dreiflüglige Abschnitt umfasst - außer den in den drei Reihen angeordneten Flügelelementen - keine weiteren Flügelelemente, also auch nicht einzelne, zwischen diesen Reihen angeordnete Flügelelemente. Dabei wird unter einer sich in der axialen Richtung der Schneckenwelle über zumindest einen Abschnitt der (Außen)umfangsfläche des Wellenstabes erstreckenden Reihe von Flügelelementen im Sinne der vorliegenden Erfindung verstanden, dass eine über die Mittelpunkte voneinander in axialer Richtung beabstandeter Flügelelemente einer Reihe gelegte Verbindungslinie zumindest im Wesentlichen eine Gerade ist, wobei die maximale Abweichung der Verbindungslinie von einer Gerade weniger als 10°, bevorzugt weniger als 5° und weiter bevorzugt weniger als 2° beträgt. Unter Mittelpunkt eines Flügelelements wird dabei der Punkt verstanden, der in der Mitte der Länge der Außenumfangsfläche des Flügelelements liegt, wobei die Länge die längste Erstreckung bzw. Längserstreckung der Außenumfangsfläche des Flügelelements ist, also die längste mögliche Gerade zwischen zwei verschiedenen Punkten auf der Außenumfangsfläche des Flügelelements.

Wie dargelegt, sind die Flügelelemente auf der Umfangsfläche des Wellenstabes zumindest in einem sich in der axialen Richtung der Schneckenwelle erstreckenden Abschnitt, in drei Reihen angeordnet. Die anderen axialen Abschnitte der Schneckenwelle können anders ausgestaltet sein, nämlich beispielsweise zweiflüglig, vierflüglig oder abwechselnd zwei- und vierflüglig. Die Schneckenwelle gemäß der vorliegenden Erfindung kann auch zwei, drei oder mehrere dreiflüglige Abschnitte umfassen, die voneinander jeweils durch ein oder mehrere andere Abschnitte getrennt sind, wobei diese ein oder mehrere andere Abschnitte wiederum zweiflüglig, vierflüglig oder abwechselnd zwei- und vierflüglig ausgestaltet sein können.

Erfindungsgemäß ist mindestens eines der Flügelelemente einer der Reihen von einem der Flügelelemente einer der anderen Reihen verschieden, indem es kürzer und/oder schmaler ist, und/oder die Reihen der Flügelelemente verteilen sich, im Querschnitt des Wellenstabes gesehen, über den durch die Außenumfangsfläche des Wellenstabes definierten Umfang hinweg ungleichmäßig.

Dies wird gemäß einer ersten besonders bevorzugten Ausführungsform der vorliegenden Erfindung dadurch erreicht, dass mindestens eines der Flügelelemente einer der Reihen des zumindest einen sich in der axialen Richtung der Schneckenwelle erstreckenden Abschnitts kürzer und/oder schmaler ist als wenigstens ein anderes der Flügelelemente einer der anderen beiden Reihen. Mithin unterscheiden sich bei dieser Ausführungsform der vorliegenden Erfindung die Dimensionen der Flügelelemente verschiedener Reihen untereinander, und zwar im Hinblick auf die Länge und/oder Breite der Flügelelemente. Dabei ist die Länge der Außenumfangsfläche eines Flügelelements in diesem Zusammenhang, wie vorstehend dargelegt, die längste gerade Erstreckung der Außenumfangsfläche des Flügelelements. Zudem ist die Breite B der Außenumfangsfläche eines Flügelelements in diesem Zusammenhang die längste gerade Erstreckung der Außenumfangsfläche des Flügelelements, welche sich senkrecht zu der Länge des Flügelelements erstreckt. Die einzelnen Flügel können dabei die gleiche oder eine verschiedene Form aufweisen. Beispielsweise können alle Flügelelemente eine bikonvexe Außenumfangsfläche aufweisen, wobei die Länge von Flügelelementen einer Reihe länger ist als die einer anderen Reihe. Gleichermaßen können sich aber die Flügelelemente hinsichtlich ihrer Form unterscheiden, also die Flügelelemente einer Reihe eine bikonvexe Außenumfangsfläche aufweisen und die Flügelelemente einer anderen Reihe eine parallelogrammförmige Außenumfangsfläche aufweisen, wobei die Breite von Flügelelementen einer Reihe größer ist als die einer anderen Reihe.

Gemäß einer zweiten besonders bevorzugten Ausführungsform der vorliegenden Erfindung unterscheidet sich der Winkelabstand zwischen den Mittelpunkten M der Außenumfangsflächen der Flügelelemente auf der Umfangsfläche des Wellenstabes benachbarter Reihen zwischen mindestens zwei der drei Reihen von dem Winkelabstand zwischen mindestens anderen zwei Reihen. Die Flügelelemente aller drei Reihen können mithin die gleiche Form sowie die gleichen Dimensionen aufweisen, sofern sich die Reihen der Flügelelemente, im Querschnitt des Wellenstabes gesehen, über den durch die Außenumfangsfläche des Wellenstabes definierten Umfang hinweg ungleichmäßig verteilen. Alternativ dazu können die Flügelelemente aller drei Reihen eine verschiedene Form aufweisen.

Gemäß einer dritten besonders bevorzugten Ausführungsform der vorliegenden Erfindung ist mindestens eines der Flügelelemente einer der Reihen des zumindest einen sich in der axialen Richtung der Schneckenwelle erstreckenden Abschnitts kürzer und/oder schmaler als wenigstens ein anderes der Flügelelemente einer der anderen beiden Reihen und unterscheidet sich der Winkelabstand zwischen den Mittelpunkten M der Außenumfangsflächen der Flügelelemente auf der Umfangsfläche des Wellenstabes benachbarter Reihen zwischen mindestens zwei der drei Reihen von dem Winkelabstand zwischen mindestens anderen zwei Reihen. Auch bei dieser Ausführungsform können die Flügelelemente aller drei Reihen die gleiche Form oder eine verschiedene Form aufweisen.

Wie bei den in Rede stehenden Misch- und Knetmaschinen üblich, weist der Wellenstab der erfindungsgemäßen Schneckenwelle einen kreisförmigen Querschnitt auf, wobei sich die einzelnen Flügelelemente von der Umfangsfläche des Wellenstabes radial nach außen erstrecken.

Dabei ist die vorliegende Erfindung bezüglich der Art der Herstellung der Schneckenwelle nicht beschränkt. Beispielsweise kann die Schneckenwelle durch Fräsen eines Metallzylinders zur Ausbildung der Flügelelemente hergestellt werden oder durch Schweißen von Flügelelementen auf einen Wellenstab. Praktischerweise wird die Schneckenwelle jedoch hergestellt, indem einzelne Schneckenwellenabschnitte auf einen Basisstab aufgesteckt werden, wobei jeder Schneckenwellenabschnitt beispielsweise zwei Reihen aus jeweils 1 bis 4 benachbarten Flügelelementen umfasst.

In Weiterbildung des Erfindungsgedankens wird es vorgeschlagen, dass wenigstens 80%, bevorzugt wenigstens 90%, besonders bevorzugt wenigstens 95%, ganz besonders bevorzugt wenigstens 99% und höchst bevorzugt alle Flügelelemente einer jeden Reihe des zumindest einen sich in der axialen Richtung der Schneckenwelle erstreckenden Abschnitts jeweils untereinander gleich sind. Mithin weisen alle Flügelelemente der ersten Reihe jeweils dieselbe Form und Dimensionen, wie dieselbe Länge sowie dieselbe Breite, auf. Gleichermaßen weisen alle Flügelelemente der zweiten Reihe jeweils dieselbe Form und Dimensionen auf und weisen alle Flügelelemente der dritten Reihe jeweils dieselbe Form und Dimensionen auf, wobei sich die Flügel zwischen mindestens zwei der drei Reihen voneinander unterscheiden und/oder sich die Reihen der Flügelelemente sich, im Querschnitt des Wellenstabes gesehen, über den durch die Außenumfangsfläche des Wellenstabes definierten Umfang hinweg ungleichmäßig verteilen.

Vorzugsweise beträgt die Länge des sich in der axialen Richtung erstreckenden Abschnitts der Schneckenwelle, in dem die Flügelelemente in drei sich in der axialen Richtung der Schneckenwelle erstreckenden Reihen angeordnet sind, mindestens 0,2 D (d.h. mindestens über eine 20% des Durchmessers entsprechende Strecke), bevorzugt mindestens 5 D (d.h. mindestens über eine dem 5-fachen Durchmesser entsprechende Strecke), besonders bevorzugt mindestens 10 D (d.h. mindestens über eine dem 10-fachen Durchmesser entsprechende Strecke) und ganz besonders bevorzugt mindestens 25 D (d.h. mindestens über eine dem 25-fachen Durchmesser entsprechende Strecke) der Länge der Schneckenwelle.

Gemäß einer weiteren besonders bevorzugten Ausführungsform der vorliegenden Erfindung sind die Flügelelemente der einzelnen Reihen so orientiert, dass sich deren Längserstreckung auf der Umfangsfläche des Wellenstabes senkrecht zu der Längsrichtung der Schneckenwelle oder in einem vergleichsweise kleinen Winkel zu der Senkrechten der Längsrichtung der Schneckenwelle geneigt erstreckt. Mithin ist es bevorzugt, dass jedes der Flügelelemente des zumindest einen sich in der axialen Richtung der Schneckenwelle erstreckenden Abschnitts eine Längserstreckung aufweist, welche sich in einem Winkel von 45° bis 135°, bevorzugt von 60° bis 120°, besonders bevorzugt von 70° bis 110° und ganz besonders bevorzugt i) von 75° bis 85° oder ii) von 95° bis 105° oder iii) von mehr als 85° bis weniger als 95°, wie etwa 90°, zu der axialen Richtung der Schneckenwelle erstreckt. Alternativ dazu ist es auch möglich, auch wenn dies gemäß der vorliegenden Erfindung weniger bevorzugt ist, dass wenigstens 50%, alternativ wenigstens 80% und alternativ wenigstens 90% der Flügelelemente so orientiert sind.

In Weiterbildung des Erfindungsgedankens wird es vorgeschlagen, dass jedes der Flügelelemente des zumindest einen sich in der axialen Richtung der Schneckenwelle erstreckenden Abschnitts eine, in Draufsicht, eine Außenumfangsfläche in einer Form aufweist, welche ausgewählt ist aus der Gruppe, welche besteht aus parallelogrammförmig, elliptisch, oval, bikonvex, modifiziert elliptisch, modifiziert oval, modifiziert bikonvex und modifiziert rechteckig. Dabei bedeutet modifiziert elliptisch, modifiziert oval und modifiziert bikonvex elliptisch, oval bzw. bikonvex, wobei die beiden, in Längserstreckung der Flügelelemente gesehen, Enden der Außenumfangsfläche in der Form einer Kante, eines sich zu den Enden verjüngenden Trapezes, vorzugsweise gleichschenkligen Trapezes, oder eines sich zu den Enden verjüngenden Dreiecks, vorzugsweise gleichschenkligen Dreiecks, ausgebildet sind. Dabei kann jede der beiden seitlichen Flanken jeweils einen geraden Abschnitt aufweisen oder eine der beiden seitlichen Flanken einen geraden Abschnitt aufweisen oder keine der beiden seitlichen Flanken einen geraden Abschnitt aufweisen. Zudem bedeutet modifiziert rechteckig, dass die Außenumfangsfläche der Flügelelemente, in Draufsicht, einen mittleren rechteckigen Abschnitt aufweist, an dessen beiden, in Längserstreckung der Flügelelemente gesehen, Enden jeweils ein Endabschnitt jeweils in der Form eines sich zu den Enden verjüngenden Trapezes oder Dreiecks, vorzugsweise gleichschenkligen Trapezes oder Dreiecks, vorgesehen ist. Dabei müssen die Flügelelemente verschiedener Reihen nicht die gleiche Form aufweisen, so dass beispielsweise die Flügelelemente der ersten Reihe und die Flügelelemente der dritten Reihe eine bikonvexe Außenumfangsfläche aufweisen, wohingegen die Flügelelemente der zweiten Reihe eine parallelogrammförmige Außenumfangsfläche aufweisen.

Alternativ zu der vorgenannten Ausführungsform ist es auch möglich, auch wenn dies gemäß der vorliegenden Erfindung weniger bevorzugt ist, dass wenigstens 50%, alternativ wenigstens 80% und alternativ wenigstens 90% der Flügelelemente eine vorstehend dargelegte Außenumfangsflächenform aufweisen oder nur die Flügelelemente einer Reihe oder die Flügelelemente von zwei Reihen eine solche Außenumfangsflächenform aufweisen.

Vorzugsweise weisen alle Flügelelemente einer Reihe jeweils die gleiche Form auf, wobei die Form der Flügelelemente von zwei der drei Reihen gleich ist und sich von der Form der Flügelelemente der dritten Reihe unterscheidet.

Gleichermaßen bevorzugt ist es, dass alle Flügelelemente aller drei Reihe jeweils die gleiche Form aufweisen, sich aber die Flügelelemente zumindest einer Reihe von denen einer anderen Reihe in ihrer Länge und/oder Breite unterscheiden.

Gute Ergebnisse werden insbesondere erzielt, wenn jedes der Flügelelemente des zumindest einen sich in der axialen Richtung der Schneckenwelle erstreckenden Abschnitts, in Draufsicht, eine bikonvexe, modifizierte bikonvexe oder parallelogrammförmige Außenumfangsfläche aufweist, wobei sich die Form der Flügelelemente der verschiedenen Reihen voneinander unterscheiden können. Beispielsweise können die Flügelelemente der ersten und dritten Reihe eine parallelogrammförmige Außenumfangsfläche aufweisen, wohingegen die Flügelelemente der zweiten Reihe eine modifizierte bikonvexe Außenumfangsfläche, deren seitliche Flanken jeweils einen geraden Abschnitt aufweisen, aufweisen. Ebenso bevorzugt können die Flügelelemente aller der drei Reihen eine modifizierte bikonvexe Außenumfangsfläche aufweisen, wobei jeweils ein der beiden seitlichen Flanken oder beide der beiden seitlichen Flanken einen geraden Abschnitt aufweisen, wobei die Flügelelemente der ersten und dritten Reihe breiter sind als die Flügelelemente der zweiten Reihe.

In Weiterbildung des Erfindungsgedankens wird es vorgeschlagen, dass das Verhältnis von Länge zu Breite eines jeden der Flügelelemente aller drei Reihen 1 bis 30, bevorzugt 2 bis 20, besonders bevorzugt 5 bis 15 und ganz besonders bevorzugt 6 bis 9 oder 10 bis 12 beträgt, wobei die Länge L die längste gerade Erstreckung der Außenumfangsfläche des Flügelelements ist und die Breite B die längste gerade Erstreckung der Außenumfangsfläche des Flügelelements ist, welche sich senkrecht zu der Länge L des Flügelelements erstreckt. Die Verhältnisse von Länge zu Breite der Flügelelemente verschiedener Reihen können sich dabei voneinander unterscheiden.

Beispielsweise kann das Verhältnis von Länge L zu Breite B eines jeden der Flügelelemente von zwei der drei Reihen jeweils gleich sein und sich von dem Verhältnis von Länge L zu Breite B der Flügelelemente der dritten Reihe unterscheiden.

Ferner ist es bevorzugt, dass die Flügelelemente von zwei der drei Reihen des zumindest einen sich in der axialen Richtung der Schneckenwelle erstreckenden Abschnitts untereinander gleich sind und die Flügelelemente der dritten Reihe die gleiche Form wie die Flügelelemente der anderen Reihen aufweisen, aber um 1 bis 25%, bevorzugt 2 bis 20%, besonders bevorzugt 5 bis 15% länger oder kürzer sind als die Flügelelemente der anderen Reihe.

Alternativ zu der vorgenannten Ausführungsform ist es bevorzugt, dass die Flügelelemente von zwei der drei Reihen des zumindest einen sich in der axialen Richtung der Schneckenwelle erstreckenden Abschnitts untereinander gleich sind und die Flügelelemente der dritten Reihe eine andere Form wie die Flügelelemente der anderen Reihe aufweisen, wobei die Flügelelemente der anderen Reihe um 1 bis 25%, bevorzugt 2 bis 20%, besonders bevorzugt 5 bis 15% länger oder kürzer sind als die Flügelelemente der anderen beiden Reihen.

Insbesondere können die Flügelelemente von zwei der drei Reihen des zumindest einen sich in der axialen Richtung der Schneckenwelle erstreckenden Abschnitts untereinander gleich sein und die Flügelelemente der dritten Reihe die gleiche Form wie die Flügelelemente der anderen Reihen aufweisen, aber um 1 bis 25%, bevorzugt 2 bis 20%, besonders bevorzugt 5 bis 15% breiter oder schmaler sein als die Flügelelemente der anderen Reihen.

Ebenso gut ist es möglich, dass die Flügelelemente von zwei der drei Reihen des zumindest einen sich in der axialen Richtung der Schneckenwelle erstreckenden Abschnitts untereinander gleich sind und die Flügelelemente der dritten Reihe eine andere Form wie die Flügelelemente der anderen Reihe aufweisen, wobei die Flügelelemente der anderen Reihe um 1 bis 25%, bevorzugt 2 bis 20%, besonders bevorzugt 5 bis 15% breiter oder schmaller sind als die Flügelelemente der anderen beiden Reihen.

Gemäß einer weiteren bevorzugten Ausführungsform der vorliegenden Erfindung ist es vorgesehen, dass die Flügelelemente von zwei der drei Reihen des zumindest einen sich in der axialen Richtung der Schneckenwelle erstreckenden Abschnitts untereinander gleich oder verschieden sind und sich der Winkelabstand zwischen den Mittelpunkten M der Außenumfangsflächen der Flügelelemente der zwei Reihen auf der Umfangsfläche des Wellenstabes von den Winkelabständen zwischen dem Mittelpunkt M der Außenumfangsflächen der anderen Reihe und jedem der Mittelpunkte M der Außenumfangsflächen der zwei Reihen auf der Umfangsfläche des Wellenstabes unterscheidet. Dabei können die Längen und/oder die Breiten und/oder die Verhältnisse von Länge zu Breite der Flügelelemente der drei Reihen untereinander gleich oder verschieden sein. Dabei können die Flügelelemente der dritten Reihe die gleiche oder eine andere Form als die Flügelelemente der anderen Reihen aufweisen.

Bei der vorstehenden Ausführungsform ist es insbesondere bevorzugt, dass der Winkelabstand zwischen den Mittelpunkten M der Außenumfangsflächen der Flügelelemente von zwei der drei Reihen des zumindest einen sich in der axialen Richtung der Schneckenwelle erstreckenden Abschnitts auf der Umfangsfläche des Wellenstabes 124° bis 146°, bevorzugt 130° bis 140°, besonders bevorzugt 132° bis 138°, insbesondere bevorzugt 133° bis 137°, ganz besonders bevorzugt 134° bis 136° und höchst bevorzugt etwa 135° beträgt und die Winkelabstände zwischen dem Mittelpunkte M der Außenumfangsfläche der anderen Reihe und jedem der Mittelpunkte M der Außenumfangsflächen der zwei Reihen auf der Umfangsfläche des Wellenstabes 102° bis 123°, bevorzugt 107° bis 118°, besonders bevorzugt 110° bis 115°, insbesondere bevorzugt 111° bis 114°, ganz besonders bevorzugt 112° bis 113° und höchst bevorzugt etwa 112,5° betragen.

In Weiterbildung des Erfindungsgedankens wird es vorgeschlagen, dass die axialen Abstände jeweils zweier benachbarter Flügelelemente jeder der drei Reihen des zumindest einen sich in der axialen Richtung der Schneckenwelle erstreckenden Abschnitts jeweils gleich sind.

Vorzugsweise erstreckt sich jedes der Flügelelemente von zwei der drei Reihen des zumindest einen sich in der axialen Richtung der Schneckenwelle erstreckenden Abschnitts - im Querschnitt des Wellenstabes gesehenen - über den gleichen Winkelabstand der Umfangsfläche des Wellenstabes und erstreckt sich jedes der Flügelelemente der anderen Reihe über einen kürzeren oder längeren Winkelabschnitt, wobei der Unterschied zwischen den Winkelabständen bevorzugt 1 bis 20% und besonders bevorzugt 5 bis 15% beträgt.

Gute Ergebnisse werden insbesondere erhalten, wenn sich jedes der Flügelelemente von zwei der drei Reihen des zumindest einen sich in der axialen Richtung der Schneckenwelle erstreckenden Abschnitts - im Querschnitt des Wellenstabes gesehenen - über einen Winkelabstand von 20° bis 175°, bevorzugt von 45° bis 175° und besonders bevorzugt von 60° bis 175° der Umfangsfläche des Wellenstabes erstreckt und sich jedes der Flügelelemente von der anderen der drei Reihen über einen Winkelabstand von 20° bis 120° und bevorzugt von 20° bis 90° erstreckt. Während kürzere Flügelelemente eine bessere Mischwirkung erreichen als längere, führen längere Flügelelemente, insbesondere solche, welche sich in der Umfangsrichtung des Wellenstabes nahezu überlappen oder überlappen, zu einer hohen Fördermenge pro Schneckenwellendurchmesser und Zeiteinheit.

Grundsätzlich ist die vorliegende Erfindung bezüglich der Ausbildung der Flanken der Flügelelemente des zumindest einen zweiflügligen Abschnitts der Schneckenwelle nicht beschränkt. Die seitlichen Flanken der Flügelelemente können sich daher von der Umfangsrichtung des Wellenstabes zu der Außenumfangsfläche der Flügelelemente senkrecht nach oben erstrecken. Allerdings ist es bevorzugt, dass die sich seitlichen Flanken der Flügelelemente von der Umfangsrichtung des Wellenstabes zu der Außenumfangsfläche der Flügelelemente nicht senkrecht nach oben erstrecken, sondern gewinkelt. Gemäß einer besonders bevorzugten Ausführungsform der vorliegenden Erfindung ist es daher vorgesehen, dass sich die seitlichen Flanken jedes der Flügelelemente des zumindest einen dreiflügligen Abschnitts der Schneckenwelle in einem Winkel von 1° bis 60°, bevorzugt von 2° bis 40°, besonders bevorzugt von 3° bis 20° und ganz besonders bevorzugt von 4° bis 10° bezogen auf die Querschnittsebene des Wellenstabes nach oben zu der Außenumfangsfläche der Flügelelemente erstrecken. Alternativ dazu können, auch wenn dies weniger bevorzugt ist, nicht alle, sondern mindestens 50%, bevorzugt mindestens 80% und weiter bevorzugt mindestens 90% aller Flügelelemente Flanken aufweisen, die sich in dem vorgenannten Winkel von der Umfangsfläche des Wellenstabes nach außen erstrecken.

Ein Abschnitt für eine Schneckenwelle kann einen Wellenstab mit einem kreisförmigen Querschnitt umfassen, wobei auf der Umfangsfläche des Wellenstabes voneinander beabstandete, sich von der Umfangsfläche des Wellenstabes nach außen erstreckende Flügelelemente angeordnet sind, wobei die Flügelelemente auf der Umfangsfläche des Wellenstabes in drei sich in der axialen Richtung der Schneckenwelle erstreckenden Reihen angeordnet sind, wobei dieser sich in der axialen Richtung der Schneckenwelle erstreckende Abschnitt, außer den in den drei Reihen angeordneten Flügelelementen, keine weiteren Flügelelemente umfasst, wobei i) mindestens eines der Flügelelemente einer der Reihen von wenigstens einem anderen der Flügelelemente einer der anderen beiden Reihen verschieden ist, indem es kürzer und/oder schmaler ist, und/oder ii) sich die Reihen der Flügelelemente, im Querschnitt des Wellenstabes gesehen, über den durch die Außenumfangsfläche des Wellenstabes definierten Umfang hinweg ungleichmäßig verteilen, und wobei jede Reihe vorzugsweise ein, zwei, drei oder vier axial voneinander beabstandete Flügelelemente umfasst.

Ferner betrifft die vorliegende Erfindung ein Gehäuse einer Misch- und Knetmaschine für kontinuierliche Aufbereitungsprozesse, wobei in dem Gehäuse ein hohler Innenraum ausgebildet ist, in dem sich zumindest abschnittsweise in axialer Richtung eine zuvor beschriebene Schneckenwelle erstreckt, und wobei an der Innenumfangsfläche des Gehäuses sich in das Gehäuse zumindest abschnittsweise hinein erstreckende Aufnahmen für Knetelemente angeordnet sind, wobei die Aufnahmen an der Innenumfangsfläche des Gehäuses in zumindest drei sich in der axialen Richtung über zumindest einen Abschnitt der Innenumfangsfläche des Gehäuses erstreckenden Reihen angeordnet sind.

Vorzugsweise sind die Aufnahmen an der Innenumfangsfläche des Gehäuses in zwei, drei, vier oder sechs, bevorzugt in drei, vier oder sechs, besonders bevorzugt in vier oder sechs und höchst bevorzugt in sechs sich in der axialen Richtung über zumindest einen Abschnitt der Innenumfangsfläche des Gehäuses erstreckenden Reihen angeordnet.

Zudem ist es bevorzugt, dass die Reihen der Aufnahmen für Knetelemente, im Querschnitt des Gehäuses gesehen, über die Innenumfangsfläche des Gehäuses hinweg ungleichmäßig verteilt sind.

Gemäß einer weiteren bevorzugten Ausführungsform der vorliegenden Erfindung ist es vorgesehen, dass die Innenumfangsfläche des Gehäuses im Querschnitt kreisförmig ist und zumindest einer der im Querschnitt des Gehäuses gesehenen Winkelabstände zwischen jeweils zwei Aufnahmen benachbarter Reihen an der Innenumfangsfläche des Gehäuses gegenüber dem Wert von 360°/n um zumindest 1°, bevorzugt um zumindest 2,5°, besonders bevorzugt um zumindest 5° und ganz besonders bevorzugt um zumindest 10° abweicht und bevorzugt alle Winkelabstände zwischen jeweils zwei Aufnahmen benachbarter Reihen gegenüber dem Wert von 360°/n um zumindest 1°, bevorzugt um zumindest 2,5°, besonders bevorzugt um zumindest 5° und ganz besonders bevorzugt um zumindest 10° abweichen, wobei n die Anzahl der Reihen der Aufnahmen ist.

In Weiterbildung des Erfindungsgedankens wird es vorgeschlagen, dass drei der Reihen von Aufnahmen für Knetelemente mit Knetelementen bestückt sind.

Ein weiterer Gegenstand der vorliegenden Erfindung ist eine Misch- und Knetmaschine für kontinuierliche Aufbereitungsprozesse, welche ein zuvor beschriebenes Gehäuse umfasst. Bei dem kontinuierlichen Aufbereitungsprozess kann es sich um die Herstellung von Polymergranulat (z. B. von Weich-PVC, Hart-PVC, PVC-Mischungen, chloriertem PVC oder Wood-Plastic Composites (WPC)), von Polymerstrangpressprofilen oder von Polymerformteilen, um die Aufbereitung von Kabelmassen, um die Herstellung von Beschichtungen (wie Pulverlacken, Toner, Duoplasten etc.), um die Kalanderbeschickung (wie PVC, PP, PET, TPE), um die Herstellung viskoser Nahrungsmittel (wie Kaugummimassen), um die Herstellung von Anodenmassen und andere Anwendungen handeln.

Nachfolgend wird die vorliegende Erfindung unter Bezug auf die Zeichnung näher beschrieben, in der:
- Fig. 1a: einen schematischen Längsschnitt einer erfindungsgemäßen Misch- und Knetmaschine zeigt;
- Fig. 1b: eine perspektivische Ansicht des Gehäuses der in der Fig. 1a gezeigten Misch- und Knetmaschine zeigt;
- Fig. 2a: eine perspektivische Ansicht eines axialen Abschnitts einer Schneckenwelle gemäß einer Ausführungsform der vorliegenden Erfindung zeigt;
- Fig. 2b: eine Draufsicht des in der Fig. 2a gezeigten axialen Abschnitts der Schneckenwelle zeigt;
- Fig. 2c: eine seitliche Draufsicht auf den in der Fig. 2a gezeigten axialen Abschnitt der Schneckenwelle zeigt;
- Fig. 3a: eine perspektivische Ansicht eines axialen Abschnitts einer Schneckenwelle gemäß einer anderen Ausführungsform der vorliegenden Erfindung zeigt;
- Fig. 3b: eine Draufsicht des in der Fig. 3a gezeigten axialen Abschnitts der Schneckenwelle zeigt;
- Fig. 4a: eine perspektivische Ansicht eines axialen Abschnitts einer Schneckenwelle gemäß einer anderen Ausführungsform der vorliegenden Erfindung zeigt;
- Fig. 4b: eine Draufsicht des in der Fig. 4a gezeigten axialen Abschnitts der Schneckenwelle zeigt;
- Fig. 5: die Abwicklung der Mantelfläche des Wellenstabes eines axialen Abschnitts der Schneckenwelle mit darauf angeordneten Flügelelementen und in die Spalte zwischen den Flügelelementen hineinragenden Knetelementen gemäß einer anderen Ausführungsform der vorliegenden Erfindung zeigt;
- Fig. 6: die Abwicklung der Mantelfläche des Wellenstabes eines axialen Abschnitts einer Schneckenwelle mit darauf angeordneten Flügelelementen und in die Spalte zwischen den Flügelelementen hineinragenden Knetelementen gemäß einer anderen Ausführungsform der vorliegenden Erfindung zeigt und

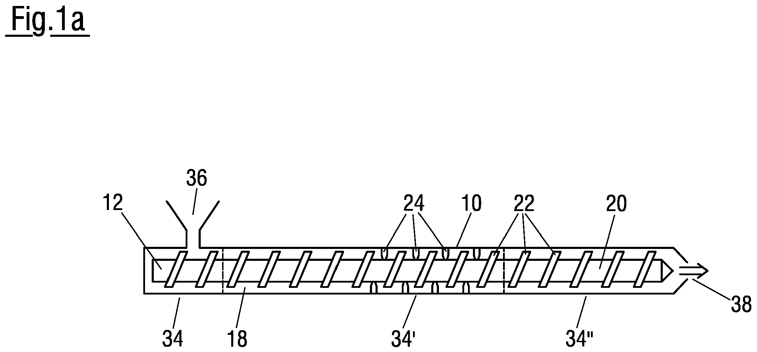

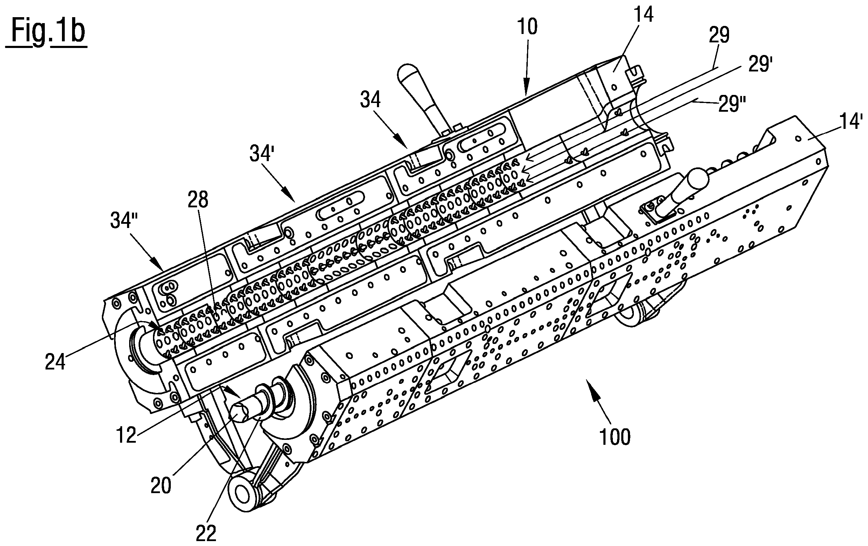

Die in den Figuren 1a und 1b gezeigte und im Ganzen mit 100 bezeichnete Misch- und Knetmaschine umfasst ein Gehäuse 10 und eine in dem Gehäuse 10 angeordnete Schneckenwelle 12. Das Gehäuse 10 umfasst zwei Gehäusehälften 14, 14', die innen mit einer sogenannten Gehäuseschale 16 ausgekleidet sind. Dabei wird die Gehäuseschale 16 in der vorliegenden Patentanmeldung als Bestandteil des Gehäuses 10 betrachtet. Die Innenumfangsfläche des Gehäuses 10 begrenzt, wenn die beiden Gehäusehälften 14, 14' geschlossen sind, einen zylindrischen hohlen Innenraum 18, also einen Innenraum 18 mit kreisförmigem Querschnitt. Die Schneckenwelle 12 umfasst einen Wellenstab 20, auf dessen Umfangsfläche Flügelelemente 22 angeordnet sind, welche sich auf der Umfangsfläche des Wellenstabes 20 radial nach außen erstrecken, wobei die einzelnen Flügelelemente 22 voneinander beabstandet sind. In den beiden Gehäusehälften 14, 14' sind Aufnahmen 28 für Knetelemente 24, also für Knetbolzen, Knetzähne und dergleichen, vorgesehen. Dabei ist jede der Aufnahmen 28 eine Bohrung 28, welche sich von der Innenumfangsfläche der Gehäuseschale 16 durch die Gehäusewand hindurch erstreckt. Das untere, radial innen liegende Ende jeder Aufnahme 28 kann beispielsweise im Querschnitt vierkantig ausgestaltet sein. Jeder Knetbolzen 24 kann dann beispielsweise an seinem unteren Ende ein passgenau in das vierkantig ausgestaltete radial innere Ende der Aufnahmen 28 passendes Ende aufweisen und ist dadurch im eingesetzten Zustand verdrehsicher in der Aufnahme 28 fixiert. Der Knetbolzen 24 ist an seinem in der Aufnahme 28 liegenden Ende mit einem in dem darüberliegenden Ende der Aufnahme 28 eingesetzten Fixierelement (nicht dargestellt) durch Verschrauben verbunden. Alternativ kann der Knetbolzen 24 auch ein Innengewinde für eine Schraube aufweisen und anstelle über das Fixierelement und der Mutter mit einer Schraube fixiert sein.

Wie insbesondere aus der Figur 1b hervorgeht, erstrecken sich die voneinander jeweils gleich beabstandeten Aufnahmen 28 für die Knetbolzen 24 in jeder der beiden Gehäusehälften 14, 14', in der axialen Richtung gesehen, in Form von drei Reihen 29, 29', 29". Somit beträgt die Gesamtzahl der Reihen von Aufnahmen 29, 29', 29" des Gehäuses sechs. Unter Reihe wird im Sinne der vorliegenden Erfindung verstanden, dass eine über die voneinander in axialer Richtung beabstandeten Aufnahmen 28 einer Reihe 29, 29', 29" gelegte Verbindungslinie eine Gerade ist. Wie in den Figuren 1a und 1b gezeigt, ist die Misch- und Knetmaschine 100 in axialer Richtung in mehrere Verfahrensabschnitte 34, 34', 34" unterteilt, wobei jeder Verfahrensabschnitt 34, 34', 34" hinsichtlich der Anzahl an Knetbolzen 24 sowie der Anzahl und der Ausdehnung der Flügelelemente 22 auf dem Wellenstab 20 an die Funktion der einzelnen Verfahrensabschnitte 34, 34', 34" angepasst ist. Wie in der Figur 1b dargestellt, sind in dem linken Abschnitt 34 und in dem rechten Abschnitt 34" der oberen Gehäusehälfte 14 von den drei Reihen 29, 29', 29" von Aufnahmen 28 für Knetbolzen 24 zwei Reihen, nämlich die obere Reihe 29 und die untere Reihe 29", mit Knetbolzen 24 bestückt, wohingegen die mittlere Reihe 29' nicht mit Knetbolzen 24 bestückt ist. Im Unterschied dazu ist in dem mittleren Abschnitt 34' der oberen Gehäusehälfte 14 von den drei Reihen 29, 29', 29" von Aufnahmen 28 für Knetbolzen 24 eine Reihe, nämlich die mittlere Reihe 29', mit Knetbolzen 24 bestückt, wohingegen die obere Reihe 29 und die untere Reihe 29" nicht mit Knetbolzen 24 bestückt ist. In dem mittleren Abschnitt 34' der unteren Gehäusehälfte 14' sind zwei Reihen, nämlich die obere und untere Reihe, mit Knetbolzen bestückt, so dass der mittlere Abschnitt 34' des Gehäuses 10 insgesamt drei Reihen von sich gegenüberliegenden Knetbolzen 24 aufweist. Das zu mischende Ausgangsmaterial wird der Misch- und Knetmaschine 100 über den Fülltrichter 36 zugeführt, dann durch die Verfahrensabschnitte 34, 34', 34" geführt und schließlich über die Austrittsöffnung 38 abgeführt. Anstelle der dargestellten Verfahrensabschnitte 34, 34', 34" kann die erfindungsgemäße Misch- und Knetmaschine 100 auch mehr Verfahrensabschnitte, wie insbesondere auch vier Verfahrensabschnitte, oder weniger Verfahrensabschnitte, wie zwei oder einen Verfahrensabschnitt, aufweisen.

Erfindungsgemäß ist die Schneckenwelle 12 für eine Misch- und Knetmaschine gemäß der vorliegenden Erfindung so ausgestaltet, dass die Flügelelemente 22 auf der Umfangsfläche des Wellenstabes 20, zumindest in einem sich in der axialen Richtung der Schneckenwelle 12 erstreckenden Abschnitt, wie dem in der Figur 1b gezeigten mittleren Verfahrensabschnitt 34', in drei sich in der axialen Richtung der Schneckenwelle 12 erstreckenden Reihen angeordnet sind, also die Schneckenwelle 12 abschnittsweise dreiflüglig ausgestaltet ist, und mindestens eines der Flügelelemente einer der Reihen von einem der Flügelelemente einer der anderen Reihen verschieden ist und/oder sich die Reihen der Flügelelemente, im Querschnitt des Wellenstabes gesehen, über den durch die Außenumfangsfläche des Wellenstabes definierten Umfang hinweg ungleichmäßig verteilen.

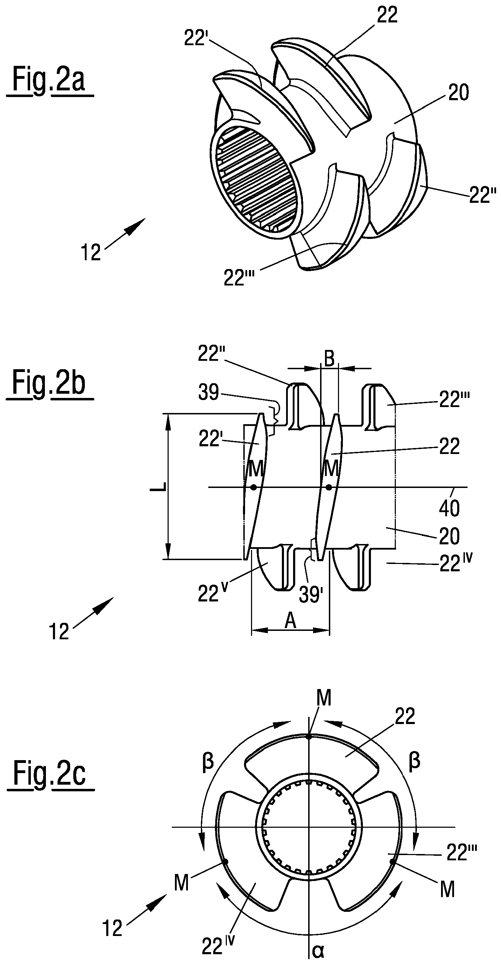

In den Figuren 2a, 2b und 2c ist ein solcher dreiflügliger Abschnitt einer Schneckenwelle 12 gemäß einer bevorzugten Ausführungsform der vorliegenden Erfindung dargestellt. Auf dem im zylindrischen Wellenstab 20 der Schneckenwelle 12 sind Flügelelemente 22, 22', 22", 22"', 22^{iv}, 22^{v} angeordnet, welche sich von der Umfangsfläche des Wellenstabes 20 radial nach außen erstrecken. Dabei sind die einzelnen Flügelelemente 22, 22', 22", 22"', 22^{iv}, 22^{v} so ausgestaltet, dass sie, in Draufsicht, modifizierte bikonvexe Außenumfangsflächen aufweisen, in denen die beiden, in Längserstreckung der Flügelelemente gesehen, Enden der Außenumfangsflächen in der Form einer Kante ausgebildet sind und jeweils eine Flanke der beiden gegenüberliegenden Endabschnitte einen geraden Abschnitt 39, 39' aufweisen. Die Längserstreckungen L der Flügelelemente 22, 22', 22", 22"', 22^{iv}, 22^{v} erstrecken sich nahezu senkrecht zu der Längsrichtung der Schneckenwelle 12. Unter Längserstreckung L wird dabei die längste mögliche Gerade zwischen zwei verschiedenen Punkten auf der Außenumfangsfläche eines Flügelelements 22, 22', 22", 22"', 22^{iv}, 22^{v}, also im vorliegenden Fall die Länge L, verstanden. Alle Flügelelemente 22, 22', 22", 22"', 22^{iv}, 22^{v} weisen dieselbe Form sowie dieselben Dimensionen auf. Das Verhältnis der Länge L zu der Breite B der einzelnen Flügelelemente 22, 22', 22", 22"', 22^{iv}, 22^{v} beträgt etwa 8,5, wobei die Breite B die längste gerade Erstreckung der Außenumfangsfläche des Flügelelements 22, 22', 22", 22"', 22^{iv}, 22^{v} ist, welche sich senkrecht zu der Länge L des Flügelelements 22, 22', 22", 22"', 22^{iv}, 22^{v} erstreckt.

Dabei sind sowohl die axial voneinander beabstandeten Flügelelemente 22, 22' in einer sich axial erstreckenden Reihe 40 als auch die axial voneinander beabstandeten Flügelelemente 22", 22"' sowie 22^{iv}, 22^{v} in jeweils einer sich axial erstreckenden Reihe angeordnet. Eine sich axial erstreckende Reihe 40 von Flügelelementen 22, 22', 22", 22"', 22^{iv}, 22^{v} liegt gemäß der vorliegenden Erfindung vor, wenn - wie in der in den Figuren 2a, 2b und 2c gezeigten Ausführungsform - eine über die Mittelpunkte M der Außenumfangsfläche von voneinander in axialer Richtung beabstandeter Flügelelemente 22, 22' gelegte Verbindungslinie eine Gerade ist. Der Mittelpunkt M eines Flügelelements 22, 22' ist dabei der Punkt, der in der Mitte der Länge L des Flügelelements 22, 22' liegt. Das Verhältnis des axialen Abstandes A der benachbarten Flügelelemente 22, 22' der Reihe 40 beträgt jeweils etwa 5,5. Dabei ist die Breite B des Flügelelements wie vorstehend definiert und ist der axiale Abstand A zweier axial benachbarter Flügelelemente 22, 22'der Abstand zwischen den Mittelpunkten M der Außenumfangsflächen der axial benachbarten Flügelelemente 22, 22'. Eines der drei - im Querschnitt des Wellenstabes 20 gesehen - in der Umfangsrichtung des Wellenstabes 20 benachbarten Flügelelemente 22 ist axial geringfügig zu den beiden anderen Flügelelemente 22"', 22^{iv} versetzt. Alle der Flügelelemente 22, 22', 22", 22"', 22^{iv}, 22^{v} erstrecken sich jeweils über den gleichen Winkelabschnitt von 115° über die (Außen)umfangsfläche bzw. Mantelfläche des Wellenstabes 20.

Allerdings verteilen sich die Reihen 40 der Flügelelemente 22, 22', 22", 22"', 22^{iv}, 22^{v}, im Querschnitt des Wellenstabes 20 gesehen, über den durch die Außenumfangsfläche des Wellenstabes 20 definierten Umfang hinweg ungleichmäßig. Der Winkelabstand α der Mittelpunkte M zwischen den Flügelelementen 22"', 22'^{v} auf der Umfangsfläche des Wellenstabes 20 beträgt 135°, wohingegen die Winkelabstände β der Mittelpunkte M zwischen den Flügelelementen 22, 22'" und 22, 22'^{v} auf der Umfangsfläche des Wellenstabes 20 jeweils 112,5° betragen.

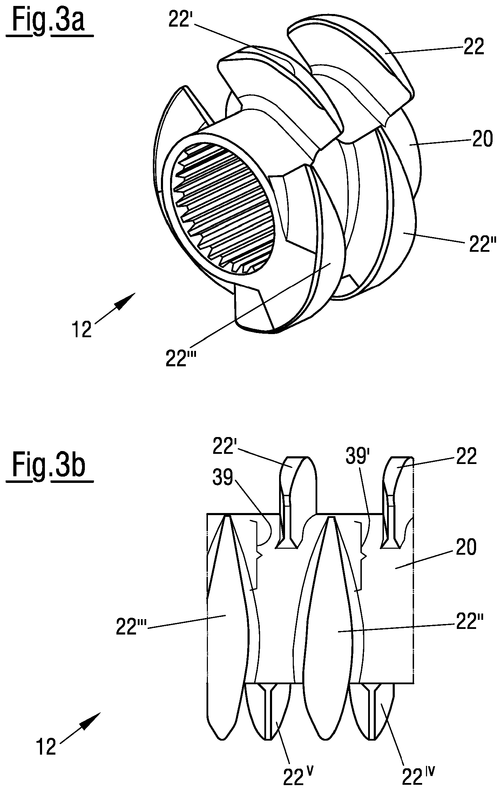

In den Figuren 3a und 3b ist ein dreiflügliger Abschnitt einer Schneckenwelle 12 gemäß einer anderen bevorzugten Ausführungsform der vorliegenden Erfindung dargestellt. Die Außenumfangsflächen der Flügelelemente 22, 22' sind wie in der Ausführungsform der Figuren 2a, 2b und 2c modifiziert bikonvex ausgestaltet, wohingegen die Außenumfangsflächen der Flügelelemente 22", 22"', 22^{iv}, 22^{v} der anderen beiden Reihen eine andere, ebenfalls modifizierte bikonvexe Form aufweisen, wobei die Außenumfangsflächen der Flügelelemente 22", 22"', 22^{iv}, 22^{v} jedoch breiter sind als die der Flügelelemente 22, 22' und bei den Flügelelemente 22", 22"', 22^{iv}, 22^{v} die beiden gleichen Enden der seitlichen Flanken einen geraden 39, 39' Abschnitt aufweisen.

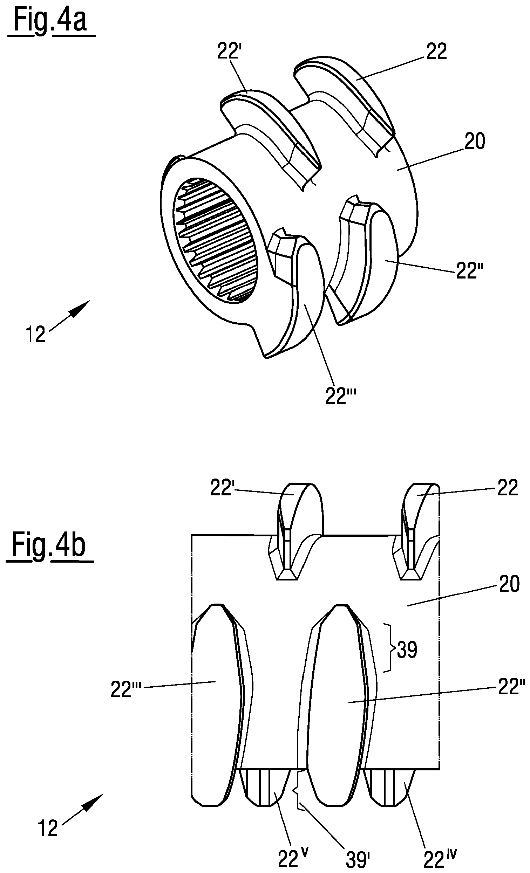

In den Figuren 4a und 4b ist ein dreiflügliger Abschnitt einer Schneckenwelle 12 gemäß einer anderen bevorzugten Ausführungsform der vorliegenden Erfindung dargestellt. Die Außenumfangsflächen der Flügelelemente 22, 22' sind wie in der Ausführungsform der Figuren 2a, 2b und 2c modifiziert bikonvex ausgestaltet, wohingegen die Außenumfangsflächen der Flügelelemente 22", 22"', 22^{iv}, 22^{v} der anderen beiden Reihen eine andere, ebenfalls modifizierte bikonvexe Form aufweisen, wobei die Außenumfangsflächen der Flügelelemente 22", 22"', 22^{iv}, 22^{v} jedoch breiter sind als die der Flügelelemente 22, 22', die Endabschnitte der Außenumfangsflächen der Flügelelemente 22", 22"', 22^{iv}, 22^{v} in der Form jeweils eines sich zu den Enden verjüngenden Trapezes ausgestaltet sind und bei den Flügelelemente 22", 22"', 22^{iv}, 22^{v} die beiden gegenüberliegenden Enden der seitlichen Flanken einen geraden Abschnitt 39, 39' aufweisen.

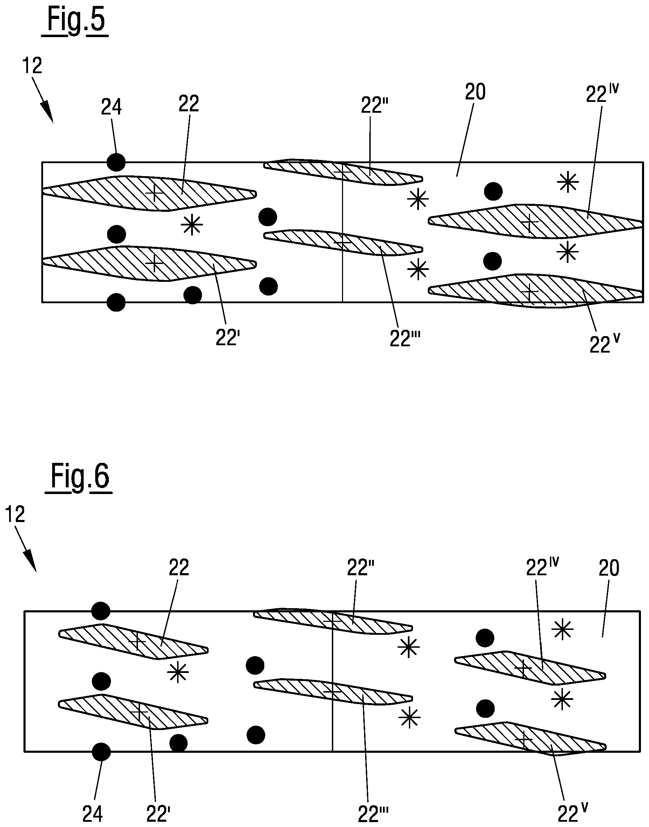

In der Figur 5 ist die Abwicklung der Mantelfläche eines Wellenstabes 20 eines axialen Abschnitts einer Schneckenwelle 12 mit darauf angeordneten Flügelelementen 22, 22', 22", 22"', 22^{iv}, 22^{v} und in die Spalte zwischen den Flügelelementen 22, 22', 22", 22"', 22^{iv}, 22^{v} hineinragenden Knetelementen 24 gemäß einem Ausführungsbeispiels der vorliegenden Erfindung dargestellt. Bei dem Betrieb der Misch- und Knetmaschine rotiert die Schneckenwelle 12 und bewegt sich zeitgleich pro Umdrehung einmal axial translatorisch vor und zurück. Dabei bewegen sich die Knetelemente 24 entlang der seitlichen Flanken der Flügelelemente 22, 22', 22", 22"', 22^{iv}, 22^{v} hin und her und bewegen sich auch in dem Spalt zwischen auf der Umfangsrichtung des Wellenstabes 20 benachbarten Flügelelementen 22, 22" bzw. 22", 22'v hin und her. Die Außenumfangsflächen der Flügelelemente 22, 22', 22", 22"', 22^{iv}, 22^{v} sind jeweils parallelogrammförmig ausgebildet, wobei jedoch die vier Flügelelemente 22, 22',22^{iv}, 22^{v} länger und breiter sind als die zwei Flügelelemente 22", 22"'.

In der Figur 6 ist eine zu der in der Figur 5 alternative Ausführungsformen dargestellt. Bei der in der Figur 6 gezeigten Ausführungsform ist sind die Flügelelemente 22, 22', 22", 22"', 22^{iv}, 22^{v} ebenfalls parallelogrammförmig ausgebildet, wobei jedoch die vier Flügelelemente 22, 22',22^{iv}, 22^{v} kürzer und breiter sind als die zwei Flügelelemente 22", 22'".

### Bezugszeichenliste

- 10: Gehäuse
- 12: Schneckenwelle
- 14, 14': Gehäusehälfte
- 16: Gehäuseschale
- 18: Hohler Innenraum
- 20: Wellenstab
- 22, 22', 22", 22"', 22^{iv}, 22^{v}: Flügelelement
- 24: Knetelement/Knetbolzen
- 28: Aufnahme/Bohrung für Knetelement
- 29, 29', 29": (Axial erstreckende) Reihe von Aufnahme für Knetelemente
- 34, 34', 34": Verfahrensabschnitt
- 36: Fülltrichter
- 38: Austrittsöffnung
- 39, 39': Gerader Abschnitt eines modifiziert bikonvex ausgestalteten Flügelelements
- 40: (Axial erstreckende) Reihe von Flügelelementen
- 42: Seitliche Flanke eines Flügelelements
- 100: Misch- und Knetmaschine
- α: Winkelabstand zwischen den Mittelpunkten zweier Flügelelemente auf der Umfangsfläche des Wellenstabes
- β: Winkelabstand zwischen den Mittelpunkten zweier Flügelelemente auf der Umfangsfläche des Wellenstabes
- A: Axialer Abstand A zweier benachbarter Flügelelemente einer Reihe
- B: Breite (längste gerade Erstreckung der Außenumfangsfläche des Flügelelements, welche sich senkrecht zu der Länge des Flügelelements erstreckt)
- L: Länge (längste gerade Erstreckung der Außenumfangsfläche des Flügelelements)
- M: Mittelpunkt der Außenumfangsfläche eines Flügelelements

## Patentansprüche

1. Schneckenwelle (12) für eine Misch- und Knetmaschine (100), insbesondere für kontinuierliche Aufbereitungsprozesse, mit einem Wellenstab (20) mit einem kreisförmigen Querschnitt, auf dessen Umfangsfläche voneinander beabstandete, sich von der Umfangsfläche des Wellenstabes (20) nach außen erstreckende Flügelelemente (22, 22', 22", 22"', 22^{iv}, 22^{v}) angeordnet sind, wobei die Flügelelemente (22, 22', 22", 22"', 22^{iv}, 22^{v}) auf der Umfangsfläche des Wellenstabes (20), zumindest in einem sich in der axialen Richtung der Schneckenwelle (12) erstreckenden Abschnitt, in drei sich in der axialen Richtung der Schneckenwelle (12) erstreckenden Reihen (40) angeordnet sind, wobei dieser sich in der axialen Richtung der Schneckenwelle (12) erstreckende Abschnitt, außer den in den drei Reihen (40) angeordneten Flügelelementen (22, 22', 22", 22"', 22^{iv}, 22^{v}), keine weiteren Flügelelemente (22, 22', 22", 22'", 22^{iv}, 22^{v}) umfasst, **dadurch gekennzeichnet, dass** i) mindestens eines der Flügelelemente (22, 22', 22", 22"', 22^{iv}, 22^{v}) einer der Reihen (40) von wenigstens einem anderen der Flügelelemente (22, 22', 22", 22'", 22^{iv}, 22^{v}) einer der anderen beiden Reihen (40) verschieden ist, indem es kürzer und/oder schmaler ist, und/oder ii) sich die Reihen (40) der Flügelelemente (22, 22', 22", 22"', 22^{iv}, 22^{v}), im Querschnitt des Wellenstabes (20) gesehen, über den durch die Außenumfangsfläche des Wellenstabes (20) definierten Umfang hinweg ungleichmäßig verteilen.

2. Schneckenwelle (12) nach Anspruch 1, **dadurch gekennzeichnet, dass** sich der Winkelabstand α, β zwischen den Mittelpunkten M der Außenumfangsflächen der Flügelelemente (22, 22', 22", 22"', 22^{iv}, 22^{v}) auf der Umfangsfläche des Wellenstabes (20) benachbarter Reihen (40) zwischen mindestens zwei der drei Reihen (40) von dem zwischen mindestens anderen zwei Reihen (40) unterscheidet.

3. Schneckenwelle (12) nach Anspruch 1 oder 2, **dadurch gekennzeichnet, dass** wenigstens 80%, bevorzugt wenigstens 90%, besonders bevorzugt wenigstens 95%, ganz besonders bevorzugt wenigstens 99% und höchst bevorzugt alle Flügelelemente (22, 22', 22", 22"', 22^{iv}, 22^{v}) einer jeden Reihe (40) des zumindest einen sich in der axialen Richtung der Schneckenwelle (12) erstreckenden Abschnitts jeweils untereinander gleich sind.

4. Schneckenwelle (12) nach zumindest einem der vorhergehenden Ansprüche, **dadurch gekennzeichnet, dass** die Länge des sich in der axialen Richtung erstreckenden Abschnitts der Schneckenwelle (12), in dem die Flügelelemente (22, 22', 22", 22"', 22^{iv}, 22^{v}) in drei sich in der axialen Richtung der Schneckenwelle (12) erstreckenden Reihen (40) angeordnet sind, mindestens 0,2 D, bevorzugt mindestens 5 D, besonders bevorzugt mindestens 10 D und ganz besonders bevorzugt mindestens 25 D der Länge der Schneckenwelle (12) beträgt.

5. Schneckenwelle (12) nach zumindest einem der vorhergehenden Ansprüche, **dadurch gekennzeichnet, dass** jedes der Flügelelemente (22, 22', 22", 22'", 22^{iv}, 22^{v}) des zumindest einen sich in der axialen Richtung der Schneckenwelle (12) erstreckenden Abschnitts eine Längserstreckung aufweist, welche sich in einem Winkel von 45° bis 135°, bevorzugt von 60° bis 120°, besonders bevorzugt von 70° bis 110° und ganz besonders bevorzugt von 75° bis 85° oder von 95° bis 105° oder von mehr als 85° bis weniger als 95° zu der axialen Richtung der Schneckenwelle (12) erstreckt.

6. Schneckenwelle (12) nach zumindest einem der vorhergehenden Ansprüche, **dadurch gekennzeichnet, dass** wenigstens 50%, bevorzugt wenigstens 80% und besonders bevorzugt wenigstens 90% der Flügelelemente (22, 22', 22", 22"', 22^{iv}, 22^{v}) des zumindest einen sich in der axialen Richtung der Schneckenwelle (12) erstreckenden Abschnitts, in Draufsicht, eine Außenumfangsfläche in einer Form aufweisen, welche ausgewählt ist aus der Gruppe, welche besteht aus parallelogrammförmig, elliptisch, oval, bikonvex, modifiziert elliptisch, modifiziert oval, modifiziert bikonvex und modifiziert rechteckig.

7. Schneckenwelle (12) nach Anspruche 6, **dadurch gekennzeichnet, dass** alle Flügelelemente (22, 22', 22", 22'", 22^{iv}, 22^{v}) einer Reihe (40) jeweils die gleiche Form aufweisen, wobei die Form der Flügelelemente (22, 22', 22", 22"', 22^{iv}, 22^{v}) von zwei der drei Reihen (40) gleich ist und sich von der Form der Flügelelemente (22, 22', 22", 22'", 22^{iv}, 22^{v}) der dritten Reihe (40) unterscheidet.

8. Schneckenwelle (12) nach zumindest einem der vorhergehenden Ansprüche, **dadurch gekennzeichnet, dass** die Flügelelemente (22, 22', 22", 22"', 22^{iv}, 22^{v}) von zwei der drei Reihen (40) des zumindest einen sich in der axialen Richtung der Schneckenwelle (12) erstreckenden Abschnitts untereinander gleich sind und die Flügelelemente (22, 22', 22", 22"', 22^{iv}, 22^{v}) der dritten Reihe (40) die gleiche oder eine andere Form wie die Flügelelemente (22, 22', 22", 22'", 22^{iv}, 22^{v}) der anderen Reihen (40) aufweisen, wobei die Flügelelemente (22, 22', 22", 22"', 22^{iv}, 22^{v}) der dritten Reihe (40) um 1 bis 25%, bevorzugt 2 bis 20%, besonders bevorzugt 5 bis 15% länger, kürzer, schmaler oder breiter sind als die Flügelelemente (22, 22', 22", 22'", 22^{iv}, 22") der anderen beiden Reihen (40).

9. Schneckenwelle (12) nach zumindest einem der vorhergehenden Ansprüche, **dadurch gekennzeichnet, dass** die Flügelelemente (22, 22', 22", 22"', 22^{iv}, 22^{v}) von zwei der drei Reihen (40) des zumindest einen sich in der axialen Richtung der Schneckenwelle (12) erstreckenden Abschnitts untereinander gleich sind und sich der Winkelabstand α zwischen den Mittelpunkten M der Außenumfangsflächen der Flügelelemente (22, 22', 22", 22"', 22^{iv}, 22^{v}) der zwei Reihen (40) auf der Umfangsfläche des Wellenstabes (20) von den Winkelabständen β zwischen dem Mittelpunkt M der Außenumfangsflächen der anderen Reihe und jedem der Mittelpunkte M der Außenumfangsflächen der zwei Reihen (40) auf der Umfangsfläche des Wellenstabes (20) unterscheidet.

10. Schneckenwelle (12) nach zumindest einem der vorhergehenden Ansprüche, **dadurch gekennzeichnet, dass** der Winkelabstand α zwischen den Mittelpunkten M der Außenumfangsflächen der Flügelelemente (22, 22', 22", 22'", 22^{iv}, 22^{v}) von zwei der drei Reihen (40) des zumindest einen sich in der axialen Richtung der Schneckenwelle (12) erstreckenden Abschnitts auf der Umfangsfläche des Wellenstabes (20) 124° bis 146°, bevorzugt 130° bis 140°, besonders bevorzugt 132° bis 138°, insbesondere bevorzugt 133° bis 137°, ganz besonders bevorzugt 134° bis 136° und höchst bevorzugt etwa 135° beträgt und die Winkelabstände β zwischen dem Mittelpunkte M der Außenumfangsfläche der anderen Reihe und jedem der Mittelpunkte M der Außenumfangsflächen der zwei Reihen (40) auf der Umfangsfläche des Wellenstabes (20) 102° bis 123°, bevorzugt 107° bis 118°, besonders bevorzugt 110° bis 115°, insbesondere bevorzugt 111° bis 114°, ganz besonders bevorzugt 112° bis 113° und höchst bevorzugt etwa 112,5° betragen.

11. Schneckenwelle (12) nach zumindest einem der vorhergehenden Ansprüche, **dadurch gekennzeichnet, dass** sich jedes der Flügelelemente (22, 22', 22", 22"', 22^{iv}, 22^{v}) von zwei der drei Reihen (40) des zumindest einen sich in der axialen Richtung der Schneckenwelle (12) erstreckenden Abschnitts - im Querschnitt des Wellenstabes (20) gesehenen - über den gleichen Winkelabstand α der Umfangsfläche des Wellenstabes (20) erstreckt und sich jedes der Flügelelemente (22, 22', 22", 22"', 22^{iv}, 22^{v}) der anderen Reihe (40) über einen kürzeren oder längeren Winkelabschnitt β erstreckt, wobei der Unterschied zwischen den Winkelabständen α, β bevorzugt 1 bis 20% und besonders bevorzugt 5 bis 15% beträgt.

12. Schneckenwelle (12) nach zumindest einem der vorhergehenden Ansprüche, **dadurch gekennzeichnet, dass** sich jedes der Flügelelemente (22, 22', 22", 22"', 22^{iv}, 22^{v}) von zwei der drei Reihen (40) des zumindest einen sich in der axialen Richtung der Schneckenwelle (12) erstreckenden Abschnitts - im Querschnitt des Wellenstabes (20) gesehenen - über einen Winkelabstand α von 20° bis 175°, bevorzugt von 45° bis 175° und besonders bevorzugt von 60° bis 175° der Umfangsfläche des Wellenstabes (20) erstreckt und sich jedes der Flügelelemente (22, 22', 22", 22"', 22^{iv}, 22^{v}) von der anderen der drei Reihen (40) über einen Winkelabstand β von 20° bis 120° und bevorzugt von 20° bis 90° erstreckt.

13. Gehäuse (10) einer Misch- und Knetmaschine (100) für kontinuierliche Aufbereitungsprozesse, wobei in dem Gehäuse (10) ein hohler Innenraum (18) ausgebildet ist, in dem sich zumindest abschnittsweise in axialer Richtung eine Schneckenwelle (12) nach zumindest einem der Ansprüche 1 bis 12 erstreckt, und wobei an der Innenumfangsfläche des Gehäuses (10) sich in das Gehäuse (10) zumindest abschnittsweise hinein erstreckende Aufnahmen (28) für Knetelemente (24) angeordnet sind, wobei die Aufnahmen (28) an der Innenumfangsfläche des Gehäuses (10) in zumindest drei sich in der axialen Richtung über zumindest einen Abschnitt der Innenumfangsfläche des Gehäuses (10) erstreckenden Reihen (29, 29', 29") angeordnet sind.

14. Misch- und Knetmaschine (100) für kontinuierliche Aufbereitungsprozesse, wie zur Herstellung von Polymergranulat, Polymerstrangpressprofilen oder Polymerformteilen, welche ein Gehäuse nach Anspruch 13 umfasst.

## Claims

1. Screw shaft (12) for a mixing and kneading machine (100), in particular for continuous preparation processes, comprising a shaft bar (20) which has a circular cross section and on the circumferential surface of which mutually spaced blade elements (22, 22', 22", 22'", 22^{iv}, 22^{v}) are arranged which extend outward from the circumferential surface of the shaft bar (20), the blade elements (22, 22', 22", 22'", 22^{iv}, 22^{v}) on the circumferential surface of the shaft bar (20) being arranged, at least in a portion extending in the axial direction of the screw shaft (12), in three rows (40) extending in the axial direction of the screw shaft (12), said portion extending in the axial direction of the screw shaft (12) comprising no further blade elements (22, 22', 22", 22'", 22^{iv}, 22^{v}) other than the blade elements (22, 22', 22", 22'", 22^{iv}, 22^{v}) arranged in the three rows (40), **characterized in that** i) at least one of the blade elements (22, 22', 22", 22'", 22^{iv}, 22^{v}) of one of the rows (40) is different from at least another of the blade elements (22, 22', 22", 22"', 22^{iv}, 22^{v}) of one of the other two rows (40) **in that** it is shorter and/or narrower, and/or ii) the rows (40) of blade elements (22, 22', 22", 22"', 22^{iv}, 22^{v}), when viewed in the cross section of the shaft bar (20), are distributed unevenly over the circumference defined by the outer circumferential surface of the shaft bar (20).

2. Screw shaft (12) according to claim 1, **characterized in that** the angular distance α, β between the centers M of the outer circumferential surfaces of the blade elements (22, 22', 22", 22'", 22^{iv}, 22^{v}) on the circumferential surface of the shaft bar (20) of adjacent rows (40) between at least two of the three rows (40) differs from that between at least another two rows (40).

3. Screw shaft (12) according to claim 1 or 2, **characterized in that** at least 80%, preferably at least 90%, particularly preferably at least 95%, very particularly preferably at least 99% and most preferably all of the blade elements (22, 22', 22", 22"', 22^{iv}, 22^{v}) of each row (40) of the at least one portion extending in the axial direction of the screw shaft (12) are identical to one another.

4. Screw shaft (12) according to at least one of the preceding claims, **characterized in that** the length of the portion of the screw shaft (12) which extends in the axial direction and in which the blade elements (22, 22', 22", 22'", 22^{iv}, 22^{v}) are arranged in three rows (40) extending in the axial direction of the screw shaft (12) is at least 0.2 D, preferably at least 5 D, particularly preferably at least 10 D and very particularly preferably at least 25 D of the length of the screw shaft (12).

5. Screw shaft (12) according to at least one of the preceding claims, **characterized in that** each of the blade elements (22, 22', 22", 22'", 22^{iv}, 22^{v}) of the at least one portion extending in the axial direction of the screw shaft (12) has a longitudinal extension which extends toward the axial direction of the screw shaft (12) at an angle of from 45° to 135°, preferably from 60° to 120°, particularly preferably from 70° to 110° and very particularly preferably from 75° to 85° or from 95° to 105° or from more than 85° to less than 95°.

6. Screw shaft (12) according to at least one of the preceding claims, **characterized in that** at least 50%, preferably at least 80% and particularly preferably at least 90% of the blade elements (22, 22', 22", 22'", 22^{iv}, 22^{v}) of the at least one portion extending in the axial direction of the screw shaft (12) have, in plan view, an outer circumferential surface in a shape which is selected from the group consisting of parallelogram, elliptical, oval, biconvex, modified elliptical, modified oval, modified biconvex and modified rectangular shapes.

7. Screw shaft (12) according to claim 6, **characterized in that** all of the blade elements (22, 22', 22", 22'", 22^{iv}, 22^{v}) of a row (40) each have the same shape, the shape of the blade elements (22, 22', 22", 22"', 22^{iv}, 22^{v}) of two of the three rows (40) being the same and differing from the shape of the blade elements (22, 22', 22", 22"', 22^{iv}, 22^{v}) of the third row (40).

8. Screw shaft (12) according to at least one of the preceding claims, **characterized in that** the blade elements (22, 22', 22", 22'", 22^{iv}, 22^{v}) of two of the three rows (40) of the at least one portion extending in the axial direction of the screw shaft (12) are identical to one another and the blade elements (22, 22', 22", 22"', 22^{iv}, 22^{v}) of the third row (40) have the same shape as or a different shape from the blade elements (22, 22', 22", 22'", 22^{iv}, 22^{v}) of the other rows (40), the blade elements (22, 22', 22", 22'", 22^{iv}, 22^{v}) of the third row (40) being 1 to 25%, preferably 2 to 20%, particularly preferably 5 to 15% longer, shorter, narrower or wider than the blade elements (22, 22', 22", 22"', 22^{iv}, 22^{v}) of the other two rows (40).

9. Screw shaft (12) according to at least one of the preceding claims, **characterized in that** the blade elements (22, 22', 22", 22'", 22^{iv}, 22^{v}) of two of the three rows (40) of the at least one portion extending in the axial direction of the screw shaft (12) are identical to one another and the angular distance α between the centers M of the outer circumferential surfaces of the blade elements (22, 22', 22", 22'", 22^{iv}, 22^{v}) of the two rows (40) on the circumferential surface of the shaft bar (20) differs from the angular distances β between the center M of the outer circumferential surfaces of the other row and each of the centers M of the outer circumferential surfaces of the two rows (40) on the circumferential surface of the shaft bar (20).

10. Screw shaft (12) according to at least one of the preceding claims, **characterized in that** the angular distance α between the centers M of the outer circumferential surfaces of the blade elements (22, 22', 22", 22'", 22^{iv}, 22^{v}) of two of the three rows (40) of the at least one portion extending in the axial direction of the screw shaft (12) on the circumferential surface of the shaft bar (20) is 124° to 146°, preferably 130° to 140°, especially preferably 132° to 138°, particularly preferably 133° to 137°, very particularly preferably 134° to 136° and most preferably approximately 135° and the angular distances β between the centers M of the outer circumferential surface of the other row and each of the centers M of the outer circumferential surfaces of the two rows (40) on the circumferential surface of the shaft bar (20) are 102° to 123°, preferably 107° to 118°, especially preferably 110° to 115°, particularly preferably 111° to 114°, very particularly preferably 112° to 113° and most preferably approximately 112.5°.

11. Screw shaft (12) according to at least one of the preceding claims, **characterized in that** each of the blade elements (22, 22', 22", 22'", 22^{iv}, 22^{v}) of two of the three rows (40) of the at least one portion extending in the axial direction of the screw shaft (12) extends - when viewed in the cross section of the shaft bar (20) - over the same angular distance α of the circumferential surface of the shaft bar (20) and each of the blade elements (22, 22', 22", 22'", 22^{iv}, 22^{v}) of the other row (40) extends over a shorter or longer angular portion β, the difference between the angular distances α, β preferably being 1 to 20% and particularly preferably 5 to 15%.

12. Screw shaft (12) according to at least one of the preceding claims, **characterized in that** each of the blade elements (22, 22', 22", 22'", 22^{iv}, 22^{v}) of two of the three rows (40) of the at least one portion extending in the axial direction of the screw shaft (12) extends - when viewed in the cross section of the shaft bar (20) - over an angular distance α of from 20° to 175°, preferably from 45° to 175° and particularly preferably from 60° to 175° of the circumferential surface of the shaft bar (20) and each of the blade elements (22, 22', 22", 22"', 22^{iv}, 22^{v}) of the other of the three rows (40) extends over an angular distance β of from 20° to 120° and preferably from 20° to 90°.

13. Housing (10) of a mixing and kneading machine (100) for continuous preparation processes, wherein, in the housing (10), a hollow interior (18) is formed in which a screw shaft (12) according to at least one of claims 1 to 12 extends at least partly in the axial direction, and wherein receptacles (28) for kneading elements (24) are arranged on the inner circumferential surface of the housing (10) and extend at least partly into the housing (10), wherein the receptacles (28) on the inner circumferential surface of the housing (10) are arranged in at least three rows (29, 29', 29") extending in the axial direction over at least a portion of the inner circumferential surface of the housing (10).

14. Mixing and kneading machine (100) for continuous preparation processes, such as for the production of polymer granules, extruded polymer profiles or molded polymer parts, which machine comprises a housing according to claim 13.

## Revendications

1. Arbre de vis sans fin (12) destiné à une machine de mélange et de pétrissage (100) destinée en particulier à des processus de préparation en continu, comportant une tige d'arbre (20) comportant une section transversale circulaire, sur la surface circonférentielle de laquelle sont disposés des éléments d'ailes (22, 22', 22", 22"', 22^{iv}, 22^{v}) espacés les uns des autres et s'étendant vers l'extérieur en partant de la surface circonférentielle de la tige d'arbre (20), les éléments d'ailes (22, 22', 22", 22"', 22^{iv}, 22^{v}) étant disposés sur la surface circonférentielle de la tige d'arbre (20), dans au moins une section s'étendant dans la direction axiale de l'arbre de vis sans fin (12), en trois rangées (40) s'étendant dans la direction axiale de l'arbre de vis sans fin (12), ladite section s'étendant dans la direction axiale de l'arbre de vis sans fin (12) ne comprenant, à l'exception des éléments d'ailes (22, 22', 22", 22"', 22^{iv}, 22^{v}) disposés dans les trois rangées (40), aucun autre élément d'aile (22, 22', 22", 22'", 22^{iv}, 22^{v}), caractérisé en ce i) qu'au moins l'un des éléments d'ailes (22, 22', 22", 22'", 22iv, 22^{v}) d'une des rangées (40) diffère d'au moins un autre des éléments d'ailes (22, 22', 22", 22"', 22^{iv}, 22^{v}) d'une des deux autres rangées (40) en ce qu'il est plus court et/ou plus étroit, et/ou ii) que les rangées (40) des éléments d'ailes (22, 22', 22", 22"', 22^{iv}, 22^{v}), vues en section transversale de la tige d'arbre (20), sont réparties de façon inégale sur la circonférence définie par la surface circonférentielle externe de la tige d'arbre (20).

2. Arbre de vis sans fin (12) selon la revendication 1, **caractérisé en ce que** la distance angulaire α, β entre les points centraux M des surfaces circonférentielles externes des éléments d'ailes (22, 22', 22", 22"', 22^{iv}, 22^{v}) sur la surface circonférentielle de la tige d'arbre (20) de rangées (40) adjacentes entre au moins deux des trois rangées (40) diffère de la distance angulaire entre au moins deux autres rangées (40).

3. Arbre de vis sans fin (12) selon la revendication 1 ou 2, **caractérisé en ce qu'**au moins 80 %, de préférence au moins 90 %, de manière particulièrement préférée au moins 95 %, de manière très particulièrement préférée au moins 99 % et de manière tout particulièrement préférée tous les éléments d'ailes (22, 22', 22", 22"', 22^{iv}, 22^{v}) de chaque rangée (40) de l'au moins une section s'étendant dans la direction axiale de l'arbre de vis sans fin (12) sont respectivement identiques les uns aux autres.

4. Arbre de vis sans fin (12) selon au moins l'une des revendications précédentes, **caractérisé en ce que** la longueur de la section de l'arbre de vis sans fin (12) s'étendant dans la direction axiale, et dans laquelle les éléments d'ailes (22, 22', 22", 22"', 22^{iv}, 22^{v}) sont disposés en trois rangées (40) s'étendant dans la direction axiale de l'arbre de vis sans fin (12), est d'au moins 0,2 D, de préférence d'au moins 5 D, de manière particulièrement préférée d'au moins 10 D et de manière très particulièrement préférée d'au moins 25 D de la longueur de l'arbre de vis sans fin (12).

5. Arbre de vis sans fin (12) selon au moins l'une des revendications précédentes, **caractérisé en ce que** chacun des éléments d'ailes (22, 22', 22", 22"', 22^{iv}, 22^{v}) de l'au moins une section s'étendant dans la direction axiale de l'arbre de vis sans fin (12) présente une étendue longitudinale qui s'étend à un angle de 45° à 135°, de préférence de 60° à 120°, de manière particulièrement préférée de 70° à 110° et de manière très particulièrement préférée de 75° à 85° ou de 95° à 105° ou de plus de 85° à moins de 95° par rapport à la direction axiale de l'arbre de vis sans fin (12).

6. Arbre de vis sans fin (12) selon au moins l'une des revendications précédentes, **caractérisé en ce qu'**au moins 50 %, de préférence au moins 80 % et de manière particulièrement préférée au moins 90 % des éléments d'ailes (22, 22', 22", 22"', 22^{iv}, 22^{v}) de l'au moins une section s'étendant dans la direction axiale de l'arbre de vis sans fin (12), vus de dessus, présentent une surface circonférentielle externe d'une forme choisie dans le groupe constitué de formes en parallélogramme, elliptiques, ovales, biconvexes, elliptiques modifiées, ovales modifiées, biconvexe modifiées et rectangulaires modifiées.

7. Arbre de vis sans fin (12) selon la revendication 6, **caractérisé en ce que** tous les éléments d'ailes (22, 22', 22", 22"', 22^{iv}, 22^{v}) d'une rangée (40) présentent respectivement une forme identique, la forme des éléments d'ailes (22, 22', 22", 22"', 22^{iv}, 22^{v}) de deux des trois rangées (40) étant identique et différant de la forme des éléments d'ailes (22, 22', 22", 22"', 22^{iv}, 22^{v}) de la troisième rangée (40).

8. Arbre de vis sans fin (12) selon au moins l'une des revendications précédentes, **caractérisé en ce que** les éléments d'ailes (22, 22', 22", 22"', 22^{iv}, 22^{v}) de deux des trois rangées (40) de l'au moins une section s'étendant dans la direction axiale de l'arbre de vis sans fin (12) sont identiques les uns aux autres et **en ce que** les éléments d'ailes (22, 22', 22", 22"', 22^{iv}, 22^{v}) de la troisième rangée (40) présentent une forme identique ou une forme différente de celle des éléments d'ailes (22, 22', 22", 22"', 22^{iv}, 22^{v}) des autres rangées (40), les éléments d'ailes (22, 22', 22", 22"', 22^{iv}, 22^{v}) de la troisième rangée (40) étant plus longs, plus courts, plus étroits ou plus larges de 1 à 25 %, de préférence de 2 à 20 %, de manière particulièrement préférée de 5 à 15 % que les éléments d'ailes (22, 22', 22", 22"', 22^{iv}, 22^{v}) des deux autres rangées (40).

9. Arbre de vis sans fin (12) selon au moins l'une des revendications précédentes, **caractérisé en ce que** les éléments d'ailes (22, 22', 22", 22"', 22^{iv}, 22^{v}) de deux des trois rangées (40) de l'au moins une section s'étendant dans la direction axiale de l'arbre de vis sans fin (12) sont identiques les uns aux autres et **en ce que** la distance angulaire α entre les points centraux M des surfaces circonférentielles externes des éléments d'ailes (22, 22', 22", 22"', 22^{iv}, 22^{v}) des deux rangées (40) sur la surface circonférentielle de la tige d'arbre (20) diffère des distances angulaires β entre le point central M des surfaces circonférentielles externes de l'autre rangée et chacun des points centraux M des surfaces circonférentielles externes des deux rangées (40) sur la surface circonférentielle de la tige d'arbre (20).

10. Arbre de vis sans fin (12) selon au moins l'une des revendications précédentes, **caractérisé en ce que** la distance angulaire α entre les points centraux M des surfaces circonférentielles externes des éléments d'ailes (22, 22', 22", 22"', 22^{iv}, 22^{v}) de deux des trois rangées (40) de l'au moins une section s'étendant dans la direction axiale de l'arbre de vis sans fin (12) sur la surface circonférentielle de la tige d'arbre (20) est de 124° à 146°, de préférence de 130° à 140°, de manière particulièrement préférée de 132° à 138°, de manière plus particulièrement préférée de 133° à 137°, de manière très particulièrement préférée de 134° à 136° et de manière tout particulièrement préférée d'environ 135°, et **en ce que** les distances angulaires β entre les points centraux M de la surface circonférentielle externe de l'autre rangée et chacun des points centraux M des surfaces circonférentielles externes des deux rangées (40) sur la surface circonférentielle de la tige d'arbre (20) sont de 102° à 123°, de préférence de 107° à 118°, de manière particulièrement préférée de 110° à 115°, de manière plus particulièrement préférée de 111° à 114°, de manière très particulièrement préférée de 112° à 113° et de manière tout particulièrement préférée d'environ 112,5°.

11. Arbre de vis sans fin (12) selon au moins l'une des revendications précédentes, **caractérisé en ce que** chacun des éléments d'ailes (22, 22', 22", 22"', 22^{iv}, 22^{v}) de deux des trois rangées (40) de l'au moins une section s'étendant dans la direction axiale de l'arbre de vis sans fin (12), vu dans la section transversale de la tige d'arbre (20), s'étend sur une distance angulaire α identique de la surface circonférentielle de la tige d'arbre (20) et **en ce que** chacun des éléments d'ailes (22, 22', 22", 22"', 22^{iv}, 22^{v}) de l'autre rangée (40) s'étend sur une section angulaire β plus courte ou plus longue, la différence entre les distances angulaires α, β étant de préférence de 1 à 20 % et de manière particulièrement préférée de 5 à 15 %.

12. Arbre de vis sans fin (12) selon au moins l'une des revendications précédentes, **caractérisé en ce que** chacun des éléments d'ailes (22, 22', 22", 22"', 22^{iv}, 22^{v}) de deux des trois rangées (40) de l'au moins une section s'étendant dans la direction axiale de l'arbre de vis sans fin (12), vu dans la section transversale de la tige d'arbre (20), s'étend sur une distance angulaire α de 20° à 175°, de préférence de 45° à 175° et de manière particulièrement préférée de 60° à 175° de la surface circonférentielle de la tige d'arbre (20) et **en ce que** chacun des éléments d'ailes (22, 22', 22", 22"', 22^{iv}, 22^{v}) de l'autre des trois rangées (40) s'étend sur une distance angulaire β de 20° à 120° et de préférence de 20° à 90°.

13. Boîtier (10) d'une machine de mélange et de pétrissage (100) destinée à des processus de préparation en continu, un espace intérieur creux (18), dans lequel un arbre de vis sans fin (12) selon au moins l'une des revendications 1 à 12 s'étend au moins par sections dans la direction axiale, étant réalisé dans le boîtier (10), et des logements (28) destinés à des éléments de pétrissage (24), et qui s'étendent dans le boîtier (10) au moins par sections, étant disposés sur la surface circonférentielle interne du boîtier (10), les logements (28) étant disposés sur la surface circonférentielle interne du boîtier (10) en au moins trois rangées (29, 29', 29") s'étendant dans la direction axiale sur au moins une section de la surface circonférentielle interne du boîtier (10).

14. Machine de mélange et de pétrissage (100) destinée à des processus de préparation en continu, comme la fabrication de granulés de polymère, de profilés extrudés de polymère ou de pièces moulées de polymère, laquelle machine de mélange et de pétrissage comprend un boîtier selon la revendication 13.
